# EUROPEAN PATENT SPECIFICATION

(11) **EP 4 528 483 B1**
(45) Date of publication and mention of the grant of the patent: **04.11.2026**
(21) Application number: 23896186.6
(22) Date of filing: 08.09.2023
(51) Int. Cl.: G06F 8/65, G06F 9/445

(54) **OPERATING SYSTEM UPGRADE METHOD AND ELECTRONIC DEVICE**
BETRIEBSSYSTEMAKTUALISIERUNGSVERFAHREN UND ELEKTRONISCHE VORRICHTUNG
PROCÉDÉ DE MISE À NIVEAU DE SYSTÈME D'EXPLOITATION ET DISPOSITIF ÉLECTRONIQUE

(30) Priority: 30.11.2022 CN 202211524696
(43) Date of publication of application: 26.03.2025
(73) Proprietor: Honor Device Co., Ltd., Shenzhen, Guangdong 518040 (CN)
(72) Inventor: CHEN, chao, Shenzhen, Guangdong 518040 (CN); WANG, Yanzhao, Shenzhen, Guangdong 518040 (CN)
(74) Representative: Goddar, Heinz J.
(86) International application number: PCT/CN2023/117800
(87) International publication number: WO 2024/114029

(56) References cited:
- CN-A- 105 630 546
- CN-A- 108 595 113
- CN-A- 109 375 937
- CN-A- 113 821 235
- CN-A- 114 625 399
- US-A1- 2020 019 393

## Description

This application claims priority to Chinese Patent Application No. 202211524696.9, filed with the China National Intellectual Property Administration on November 30, 2022 and entitled "METHOD FOR UPGRADING OPERATING SYSTEM AND ELECTRONIC DEVICE".

### TECHNICAL FIELD

This application relates to the field of computer technologies, and in particular, to a method for upgrading an operating system and an electronic device.

### BACKGROUND

An over-the-air technology (Over-the-Air Technology) is a technology that implements remote upgrading of an operating system version through a wireless network interface of an electronic device. In addition, a storage device of the electronic device, for example, a read-only memory (Read-Only Memory, ROM), may store data by using a virtual A/B (namely, Virtual A/B) data storage structure. In the virtual A/B data storage structure, there are two independent static partitions (such as a static partition (A) and a static partition (B)) and a common dynamic partition (Super). For an electronic device with the virtual A/B data storage structure, when an operating system is upgraded by using the OTA (that is, a Virtual A/B OTA upgrade), an unaware upgrade may be performed when the electronic device normally runs based on a specific static partition (such as the static partition (A) or the static partition (B)), and only one common dynamic partition (Super) is required, so that utilization of a data storage space can be improved.

However, in a process of implementing embodiments of this application, the inventor finds that once the electronic device is sold, if an existing virtual A/B OTA upgrading solution is used, operating system upgrade can be completed only under a limit of partition deployment of an existing data storage structure, which greatly limits an applicable scenario of the upgrading solution.

CN 108595113 A discloses: The embodiment of the disclosure provides a method of partition adjustment and terminals, which are applied to the technical field of terminals to solve the problem of faults of operating systems of the terminals. The method includes: acquiring a first partition table when triggering on a terminal for upgrading an operating system is detected, wherein the first partition table is used to indicate Mtarget partition blocks in storage space of the terminal after upgrading of the operating system, the M target partition blocks include a first system partition block, the first system partition block is used to store system data after upgrading of the operating system, and M is a positive integer; determining M current partition blocks in the storage space of the terminal, where the M current partition blocks include a second system partition block, and the second system partition block is used to store system data of the current operating system of the terminal; and adjusting the second system partition block according to the first partition table when the size of the second system partition block is smaller than the size of the first system partition block.

### SUMMARY

In view of this, this application provides a method for upgrading an operating system and an electronic device, to adjust partition deployment in a memory without being limited to partition deployment during delivery.

According to a first aspect, an embodiment of this application provides a method for upgrading an operating system, applied to an electronic device including a memory (such as a ROM), where the memory includes a basic partition, a first static partition, a second static partition, and a dynamic partition, the electronic device includes a first partition table, and the first partition table is used to describe one type of partition deployment of the basic partition, the first static partition, the second static partition, and the dynamic partition. The electronic device obtains a patch package, where the patch package includes a second partition table, and the second partition table is used to describe another type of partition deployment of the basic partition, the first static partition, the second static partition, and the dynamic partition. The electronic device restarts for the first time after obtaining the patch package and enters a recovery mode. The electronic device migrates, in the recovery (recovery) mode, data in the basic partition, the first static partition, the second static partition, and the dynamic partition, updates partition deployment of the memory from the partition deployment described by the first partition table to the partition deployment described by the second partition table, and migrates the migrated data back to corresponding partitions in the partition deployment described by the second partition table. The electronic device restarts for the second time. In this case, the electronic device does not enter the recovery mode, but enters a normal operating system mode.

In summary, embodiments of this application are used. The electronic device can adjust the partition deployment in the recovery mode, so that a data storage structure in the memory can be changed. In this way, a storage space can be optimized without being limited to the partition deployment during delivery, and a new storage requirement can be further adapted. In addition, in a process of adjusting the partition deployment, the electronic device first migrates data, then adjusts the partition deployment, and finally retrieves the data, so that data of an operating system of a current version is still stored in the adjusted partitions. Then, after obtaining the patch package, the electronic device restarts for the second time, and still can run normally.

In a possible design of the first aspect, after the restarting, by the electronic device for the second time, the method further includes: obtaining, by the electronic device, an upgrade package of an operating system of the electronic device, and writing upgrade data in the upgrade package into the corresponding partitions in the partition deployment described in the second partition table, to complete upgrading of the operating system.

In other words, after the partition deployment is adjusted, image data in an operating system of a target version can be stored in the partitions, and data of adjacent sub-partitions does not overlay each other either. Then, after obtaining an upgrade package of the operating system of the target version, the electronic device may write the upgrade data into a corresponding partition, so that the operating system can be upgraded to the target version.

In another possible design of the first aspect, the first partition table includes partition information of a plurality of sub-partitions in the basic partition, the first static partition, and the second static partition in an operating system of a first version (namely, a version of an operating system that is currently run by the electronic device, which is referred to as a current version for short) and partition information of the dynamic partition. The second partition table includes partition information of a plurality of sub-partitions in the basic partition, the first static partition, and the second static partition in an operating system of a second version (namely, a version obtained through adjusting the partition deployment, which is referred to as an intermediate version before being upgraded to the target version for short) and partition information of the dynamic partition. The partition information includes a partition size, a partition name, a start address, and an end address.

In another possible design of the first aspect, the restarting, by the electronic device, for the first time and entering a recovery mode includes: restarting, by the electronic device, for the first time and entering the recovery mode if the first partition table is different from the second partition table.

If the first partition table is the same as the second partition table, it indicates that a partition table does not change. In this case, it is considered that an anomaly occurs, and there is no need to enter the recovery mode and further perform processing of adjusting the partition deployment. On the contrary, if the second partition table is different from the first partition table, it indicates that the second partition table changes compared with the first partition table. In this case, there is a need to enter the recovery mode and further perform processing of adjusting the partition deployment.

In other words, the recovery mode is entered only when the second partition table is updated compared with the first partition table, to avoid mistakenly entering the recovery mode without adjusting the partition deployment.

In another possible design of the first aspect, that the first partition table is different from the second partition table includes at least one of the following: the second partition table includes partition information of a first partition, and the first partition table does not include the partition information of the first partition. In addition, the first partition is newly added to the second partition table. The first partition table includes partition information of a second partition, and the second partition table does not include the partition information of the second partition. That is, the second partition is deleted from the second partition table. The first partition table includes partition information of a third partition, the second partition table includes partition information of a fourth partition, a partition name of the third partition is different from a partition name of the fourth partition, but the third partition and the fourth partition are used to store same data. That is, the third partition in the first partition table is renamed as the fourth partition in the second partition table. In addition, both the first partition table and the second partition table include partition information of a fifth partition, but first partition information of the fifth partition in the first partition table is different from first partition information of the fifth partition in the second partition table, and the first partition information does not include the partition name. That is, a partition size, a start address, and/or an end address of the fifth partition change.

The first partition, the second partition, the third partition, the fourth partition, and the fifth partition are sub-partitions in the basic partition, the first static partition, and the second static partition, or the first partition, the second partition, the third partition, the fourth partition, and the fifth partition are the dynamic partitions. In other words, a change in the partition deployment may be a change in sub-partitions in the basic partition, the first static partition, and the second static partition, or a change in the dynamic partition as a whole.

In another possible design of the first aspect, the migrating the migrated data back to corresponding partitions in the partition deployment described by the second partition table includes: migrating, by the electronic device, data migrated from a sixth partition back to a first target address range in the memory. The sixth partition is a partition other than the first partition, the second partition, and the fourth partition in the second partition table. That is, the sixth partition is neither a newly added partition, nor a deleted partition, nor a partition with a changed name. In other words, the sixth partition may be the foregoing fifth partition, or may be a partition whose partition size, start address, and end address do not change. Similarly, the sixth partition is one sub-partition in the basic partition, the first static partition, and the second static partition, or the sixth partition is the dynamic partition, and the first target address range is a range between a start address and an end address of the sixth partition in the second partition table.

In other words, for a partition in which the partition size, the start address, and/or the end address change/changes, or none of the partition size, the start address, and the end address changes, the electronic device may directly retrieve data based on the start address and the end address of the partition in the second partition table.

In another possible design of the first aspect, the migrating the migrated data back to corresponding partitions in the partition deployment described by the second partition table includes: clearing, by the electronic device, data in a second target address range in the memory. The second target address range is a range between a start address and an end address of the first partition in the second partition table.

In other words, data between a start address and an end address of the newly added partition in the memory is cleared. In this way, it can be ensured that there is no dirty data, such as no image data in the operating system of the current version, in a storage space corresponding to the newly added partition in the memory. In another possible design of the first aspect, the patch package includes first indication information, and the first indication information indicates that the first partition is newly added to the second partition table in comparison to the first partition table. For example, the first indication information is add: xbl_dump, which indicates that an xbl_dump partition is newly added to the second partition table in comparison to the first partition table. Correspondingly, before the clearing, by the electronic device, data in a second target address range in the memory, the method further includes: reading, by the electronic device, the first indication information, and querying the second partition table for the start address and the end address of the first partition based on the first indication information.

In other words, by reading the first indication information, the electronic device may obtain a name of the newly added partition. Then, the electronic device may query the second partition table for the start address and the end address of the newly added partition based on the name of the newly added partition, to determine the first target address range in which the data is to be cleared.

In another possible design of the first aspect, the migrating the migrated data back to corresponding partitions in the partition deployment described by the second partition table includes: skipping retrieving, by the electronic device, data migrated from the second partition.

In other words, for a deletion partition, the electronic device does not retrieve data migrated from the deletion partition, to avoid retrieving excess data.

In another possible design of the first aspect, the patch package includes second indication information, and the second indication information indicates that the second partition is deleted in the second partition table in comparison to the first partition table. For example, the second indication information is delete: abl_test, which indicates that an abl_test partition is deleted from the second partition table in comparison to the first partition table. The foregoing method further includes: reading, by the electronic device, the second indication information, and determining, based on the second indication information, the data migrated from the second partition.

In other words, by reading the second indication information, the electronic device may obtain a name of the deletion partition. Then, the electronic device may search, based on the name of the deletion partition, a file named by the name of the deletion partition from a location (for example, a user data partition (Userdata)) from which the data is migrated. The data stored in the file is the data migrated from the second partition.

In another possible design of the first aspect, the migrating the migrated data back to corresponding partitions in the partition deployment described by the second partition table includes: migrating, by the electronic device, data migrated from a third partition back to the third target address range in the memory. The third target address range is a range between a start address and an end address of the fourth partition in the second partition table.

In other words, the data migrated from the partition before name modification is migrated back between the start address and the end address of the partition after name modification. In this way, it is ensured that system data stored in the partition after name modification is the same as system data stored in the partition before name modification.

In another possible design of the first aspect, the patch package includes third indication information, and the third indication information indicates that the third partition in the first partition table is updated to the fourth partition in the second partition table. For example, the third indication information is change: abl_test, abl, which indicates that an abl_test partition in the first partition table is updated to an abl partition in the second partition table. Correspondingly, before the migrating, by the electronic device, data migrated from the third partition back to a third target address range in the memory, the method further includes: reading, by the electronic device, the third indication information, and querying the second partition table for the start address and the end address of the fourth partition based on the third indication information.

In other words, by reading the third indication information, the electronic device may obtain a modified partition name. Then, the electronic device may query, based on the modified partition name, the second partition table for a start address and an end address of the partition after name modification, so that the third target address range may be accurately determined.

In another possible design of the first aspect, the electronic device restarts, for the first time after obtaining the patch package, and the method includes: restarting, by the electronic device, for the first time after obtaining the patch package, if the patch package includes a data packet with a preset name, or the patch package includes a first tag. The data packet with the preset name is used to adjust partition deployment, and the first tag indicates to adjust the partition deployment.

In other words, when the patch package includes the data packet used to adjust the partition deployment and/or includes the tag indicating to adjust the partition deployment, the electronic device restarts and enters the recovery mode. In other words, the electronic device restarts and enters the recovery mode only after it is determined that a function of the patch package is to adjust the partition deployment, to avoid mistakenly entering the recovery mode when the patch package is used in another case that the recovery mode does not need to be used.

In another possible design of the first aspect, the migrating data in the basic partition, the first static partition, the second static partition, and the dynamic partition includes: migrating the data in the basic partition, the first static partition, the second static partition, and the dynamic partition if the patch package includes the data packet with the preset name. The data packet with the preset name is used to adjust the partition deployment.

In other words, after restarting for the first time, the electronic device further performs system data migration only after determining that a current scenario is a scenario in which the partition deployment is adjusted. In this way, in a scenario in which the partition deployment is not adjusted, erroneous migration of the system data is avoided, which ultimately affects system operation.

In another possible design of the first aspect, the foregoing method further includes: when the patch package includes the data packet with the preset name, storing, by the electronic device, the data packet with the preset name in a preset directory of the electronic device, and writing a preset instruction into the electronic device, where the preset instruction includes the preset name. The preset directory is a directory that the electronic device can access in the recovery mode. Correspondingly, after the restarting, by the electronic device, for the first time after obtaining the patch package, the method further includes: reading, by the electronic device, the preset instruction, to read the preset name. Then, the migrating the data in the basic partition, the first static partition, the second static partition, and the dynamic partition if the patch package includes the data packet with the preset name includes: migrating, by the electronic device, the data in the basic partition, the first static partition, the second static partition, and the dynamic partition if the preset instruction includes the preset name.

In other words, the electronic device may read the preset instruction, to determine whether a current scenario is a scenario in which the partition deployment is adjusted, to further determine whether the data needs to be migrated.

In another possible design of the first aspect, the migrating the data in the basic partition, the first static partition, the second static partition, and the dynamic partition if the patch package includes the data packet with the preset name includes: setting, by the electronic device, a preset global variable indicating to adjust the partition deployment if the patch package includes the data packet with the preset name. The electronic device detects the preset global variable, and migrates the data in the basic partition, the first static partition, the second static partition, and the dynamic partition.

In other words, the preset global variable, for example, ptable-change, indicating adjustment of the partition deployment is set, to explicitly indicate that the current scenario is the scenario in which the partition deployment is adjusted. Subsequently, in a code running process, an operation of a corresponding scenario in which the partition deployment is adjusted may be performed based on the preset global variable, and scenario determining does not need to be performed each time before performing the operation.

In another possible design of the first aspect, the preset instruction includes a preset directory, and the second partition table is stored in the data packet with the preset name. Before the updating partition deployment of the memory from the partition deployment described by the first partition table to the partition deployment described by the second partition table, the method further includes: obtaining, by the electronic device based on the preset instruction from the preset directory, the data packet with the preset name, and obtaining the second partition table from the data packet with the preset name.

In other words, the electronic device may determine a storage location of the second partition table by reading the preset instruction, so that the second partition table can be accurately obtained for adjusting the partition deployment.

In another possible design of the first aspect, the memory further includes a user data partition, and the migrating data in the basic partition, the first static partition, the second static partition, and the dynamic partition includes: migrating, by the electronic device, the data in the basic partition, the first static partition, the second static partition, and the dynamic partition to the user data partition. The migrating the migrated data back to corresponding partitions in the partition deployment described by the second partition table includes: migrating the data in the basic partition, the first static partition, the second static partition, and the dynamic partition in the user data partition back to the corresponding partitions in the partition deployment described by the second partition table.

In another possible design of the first aspect, after the migrating the migrated data back to corresponding partitions in the partition deployment described by the second partition table, the method further includes: deleting the migrated data. In this way, a storage space can be released.

An example in which the data is migrated to the user data partition (Userdata) is used. After the migration is completed, the electronic device may format the user data partition (Userdata), to delete the data in the user data partition (Userdata) and release the storage space.

In another possible design of the first aspect, the patch package includes a first version number. The obtaining, by the electronic device, a patch package includes: obtaining, by the electronic device, the patch package when the electronic device loads the basic partition, the first static partition, and the dynamic partition and runs the electronic device. After the obtaining, by the electronic device, a patch package, the method further includes: refreshing, by the electronic device, a version number in the second static partition to the first version number. By refreshing the version number, the electronic device may subsequently request the patch package or an upgrade package with the refreshed version number, to accurately obtain an updated patch package or the upgrade package. The electronic device sets a start order of the electronic device to starting from the second static partition. Then, when the electronic device starts subsequently, the electronic device can start from the second static partition. In addition, when starting from the second static partition, the electronic device may read a latest version number from the second static partition, for requesting the patch package or the upgrade package. Correspondingly, after the restarting, by the electronic device, for the second time, the method further includes: loading, by the electronic device, the basic partition, the second static partition, and the dynamic partition to run the electronic device. The electronic device reads the first version number from the second static partition. The obtaining, by the electronic device, an upgrade package of an operating system of the electronic device includes: obtaining, by the electronic device, the upgrade package of the operating system of the electronic device based on the first version number. In this way, a latest upgrade package can be accurately obtained, to upgrade the operating system.

According to a second aspect, an embodiment of this application provides a method for upgrading an operating system, applied to an electronic device including a memory (such as a ROM), where the memory includes a basic partition, a first static partition, a second static partition, a first dynamic partition, and a second dynamic partition, the electronic device includes a first partition table, and the first partition table is used to describe one type of partition deployment of the basic partition, the first static partition, the second static partition, the first dynamic partition, and the second dynamic partition. The electronic device obtains a patch package, where the patch package includes a second partition table, and the second partition table is used to describe another type of partition deployment of the basic partition, the first static partition, the second static partition, the first dynamic partition, and the second dynamic partition. The electronic device restarts for the first time after obtaining the patch package and enters a recovery mode. The electronic device migrates, in the recovery (recovery) mode, data in the basic partition, the first static partition, the second static partition, the first dynamic partition, and the second dynamic partition, updates partition deployment of the memory from the partition deployment described by the first partition table to the partition deployment described by the second partition table, and migrates the migrated data back to corresponding partitions in the partition deployment described by the second partition table. The electronic device restarts for the second time. In this case, the electronic device does not enter the recovery mode, but enters a normal operating system mode.

In other words, the method for upgrading an operating system may be further applied to a full A/B data storage structure (in which there are two sets of static partitions and dynamic partitions), to update the partition deployment.

Certainly, in the second aspect, the electronic device may also implement a possible design similar to that of the first aspect, for adjusting the partition deployment. It should be uniquely noted that, the dynamic partition in the first aspect needs to be replaced with the first dynamic partition and the second dynamic partition.

According to a third aspect, an embodiment of this application provides a method for upgrading an operating system, applied to an electronic device including a memory (such as a ROM), where the memory includes a basic partition, a static partition, and a dynamic partition, the electronic device includes a first partition table, and the first partition table is used to describe one type of partition deployment of the basic partition, the static partition, and the dynamic partition. The electronic device obtains a patch package, where the patch package includes a second partition table, and the second partition table is used to describe another type of partition deployment of the basic partition, the static partition, and the dynamic partition. The electronic device restarts for the first time after obtaining the patch package and enters a recovery mode. The electronic device migrates, in the recovery (recovery) mode, data in the basic partition, the static partition, and the dynamic partition, updates partition deployment of the memory from the partition deployment described by the first partition table to the partition deployment described by the second partition table, and migrates the migrated data back to corresponding partitions in the partition deployment described by the second partition table. The electronic device restarts for the second time. In this case, the electronic device does not enter the recovery mode, but enters a normal operating system mode.

In other words, the method for upgrading an operating system may be further applied to a data storage structure in which there is only one set of static partition and dynamic partition, to update the partition deployment.

Certainly, in the third aspect, the electronic device may also implement a possible design similar to that of the first aspect, for adjusting the partition deployment. It should be uniquely noted that, the first static partition and the second static partition in the first aspect need to be replaced with the static partitions.

According to a fourth aspect, an embodiment of this application further provides an electronic device, including a processor and a memory. The memory may use a virtual A/B data storage structure (in which there are two sets of static partitions), a full A/B data storage structure (in which there are two sets of static partitions and dynamic partitions), or a data storage structure with a single system (in which there is only one set of static partition and dynamic partition). The electronic device further includes a first partition table. The first partition table is used to describe partition deployment of the data storage structure. The processor is configured to execute software code stored in the memory, to enable the electronic device to perform the method in the first aspect, the second aspect, the third aspect, and any possible design thereof.

According to a fifth aspect, an embodiment of this application provides a chip system, where the chip system is applied to an electronic device including a display screen and a memory, the chip system includes one or more interface circuits and one or more processors, the interface circuit and the processor are interconnected through a line, the interface circuit is configured to receive a signal from the memory of the electronic device and send the signal to the processor, the signal includes computer instructions stored in the memory, and when the processor executes the computer instructions, the electronic device performs the method in the first aspect, the second aspect, the third aspect, and any possible design thereof.

According to a sixth aspect, an embodiment of this application further provides a computer storage medium, including computer instructions, where the computer instructions, when run on an electronic device, enable the electronic device to perform the method in the first aspect, the second aspect, the third aspect, and any possible design thereof.

According to a seventh aspect, this application provides a computer program product, where the computer program product, when run on a computer, enables the computer to perform the method in the first aspect, the second aspect, the third aspect, and any possible design thereof.

It may be understood that, for beneficial effects that can be achieved by the electronic device described in the fourth aspect, the chip system described in the fifth aspect, the computer storage medium described in the sixth aspect, and the computer program product described in the seventh aspect provided above, refer to the beneficial effects in the first aspect, the second aspect, the third aspect, and any possible design thereof, and details are not described herein again.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a diagram showing composition of an upgrade system according to an embodiment of this application;
FIG. 2 is a schematic diagram 1 of a data storage structure according to an embodiment of this application;
FIG. 3 is a schematic diagram 2 of a data storage structure according to an embodiment of this application;
FIG. 4 is a schematic diagram 3 of a data storage structure according to an embodiment of this application;
FIG. 5 is a diagram of a hardware structure of an electronic device 130 according to an embodiment of this application;
FIG. 6 is an interaction diagram 1 of a method for upgrading an operating system according to an embodiment of this application;
FIG. 7 is an interaction diagram 2 of a method for upgrading an operating system according to an embodiment of this application;
FIG. 8 is a schematic diagram of image file migration according to an embodiment of this application;
FIG. 9 is a schematic diagram 1 of image file retrieval according to an embodiment of this application;
FIG. 10 is a schematic diagram 2 of image file retrieval according to an embodiment of this application;
FIG. 11 is a schematic diagram 3 of image file retrieval according to an embodiment of this application;
FIG. 12 is a schematic diagram 4 of image file retrieval according to an embodiment of this application;
FIG. 13 is a flowchart of a virtual A/B upgrade according to an embodiment of this application;
FIG. 14 is a schematic diagram of a virtual A/B upgrade process according to an embodiment of this application;
FIG. 15 is an interaction diagram of adjusting a partition table according to an embodiment of this application;
FIG. 16 is a schematic diagram 4 of a data storage structure according to an embodiment of this application; and
FIG. 17 is a diagram of a structure of a chip system according to an embodiment of this application.

### DESCRIPTION OF EMBODIMENTS

It should be clear that embodiments described in this specification are merely some rather than all of embodiments of this application. All other embodiments obtained by a person of ordinary skill in the art based on embodiments of this application without making creative efforts shall fall within the protection scope of this application.

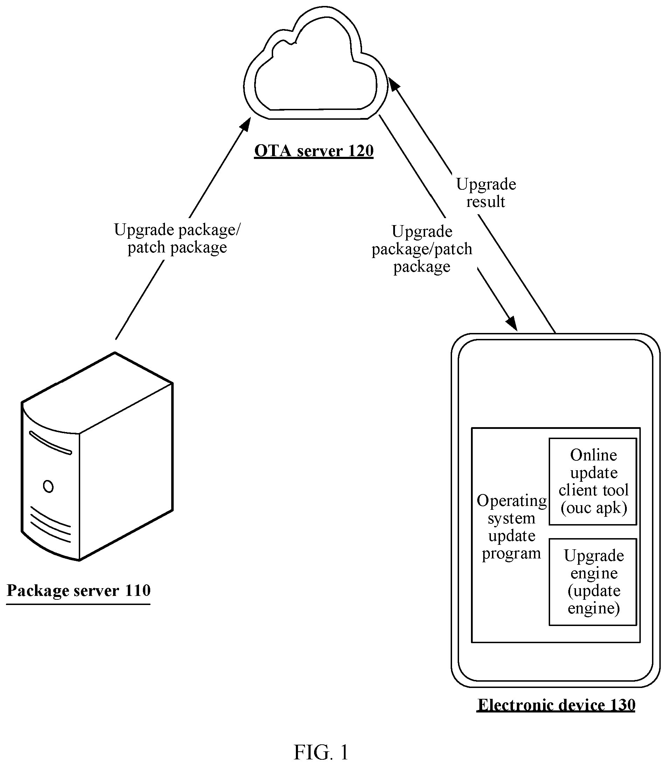

Embodiments of this application provide a method for upgrading an operating system. The method may be applied to an upgrading system provided in this application, for upgrading an operating system in an electronic device. Referring to FIG. 1, the upgrading system includes a package server 110, an OTA server 120, and an electronic device (such as a mobile phone) 130.

The package server 110 may be configured to produce an upgrade package and/or a patch package. The upgrade package is used to upgrade an operating system. The patch package may be used to repair a vulnerability of the operating system. It should be understood that, repairing the operating system by using the patch package may also be considered as an upgrade of the operating system.

The OTA server 120 is configured to uniformly manage the upgrade package and/or the patch package, and is configured for upgrade management of an accessed electronic device (such as the electronic device 130). For example, the OTA server 120 records a case that a version of the operating system in the electronic device 130 is V1.1. After subsequently receiving an operating system of V2.0 produced by the package server 110, the OTA server 120 determines that the operating system in the electronic device 130 is not the latest. That is, the OTA server 120 determines that the electronic device 130 needs to upgrade the operating system.

The electronic device 130 refers to a device that has an operating system installed therein and has a requirement to upgrade the operating system. The operating system is burned into the electronic device 130 before the electronic device 130 is delivered, so that the operating system is installed before the electronic device 130 is delivered. Then, to improve user experience, the operating system in the electronic device 130 may need to be upgraded. In this case, upgrading may be completed by using an OTA technology. For example, the electronic device 130 may request the upgrade package and/or the patch package from the OTA server 120, or receive the upgrade package and/or the patch package delivered by the OTA server 120, complete upgrading of the operating system based on the upgrade package, and repair the vulnerability of the operating system based on the patch package.

Further, as shown in FIG. 1, an operating system update program used to upgrade the operating system is installed in the electronic device 130. For example, the operating system update program includes two functional modules: an online update client apk (online update client apk, ouc apk) and an upgrade engine (update engine). The ouc apk is configured to obtain the upgrade package and/or the patch package of the operating system, for example, obtain the upgrade package and/or the patch package from the OTA server 120. The update engine is configured to perform an upgrading procedure of the operating system.

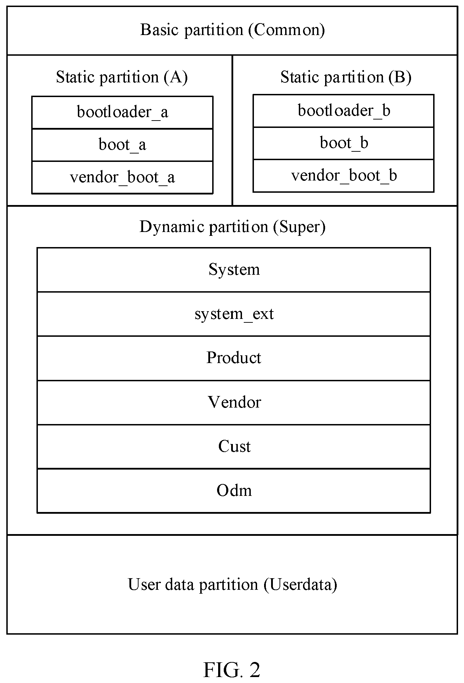

A memory in the electronic device 130, for example, a ROM, may store data by using a virtual A/B data storage structure. FIG. 2 is a schematic diagram of a virtual A/B data storage structure. As shown in FIG. 2, an Android (Android) operating system is used as an example. The virtual A/B data storage structure includes a basic partition (Common), a static partition (A) (which may also be referred to as a first static partition), a static partition (B) (which may also be referred to as a second static partition), a dynamic partition (Super), and a user data partition (Userdata).

The user data partition (Userdata) is used to store personal data of a user, for example, personal data such as an application (application, APP) installed by the user personally, and a picture, a document, and a video that are stored by the user personally. Data stored in the basic partition (Common) is system data not involved in upgrading of the operating system. A structure of the static partition (A) corresponds to a structure of the static partition (B), and sub-partition naming is distinguished from each other by using suffixes _a and _b. For example, a sub-partition of the static partition (A) includes bootloader_a, boot_a, and vendor_boot_a; and a sub-partition of the static partition (B) includes bootloader_b, boot_b, and vendor_boot_b. The dynamic partition (Super) includes a plurality of sub-partitions such as System, system_ext, vendor, product, Cust, and Odm.

It should be noted that, the data storage structure shown in FIG. 2 is merely an example. Actually, the basic partition (Common) in the data storage structure may further include a plurality of sub-partitions, such as a cache partition. In addition, the static partition (A), the static partition (B), and the dynamic partition (Super) in the data storage structure may include more or fewer sub-partitions than those shown in FIG. 2. For example, the static partition (A) may further include sub-partitions such as Patch_a, dtbo_a, and vbmeta_a. Correspondingly, the static partition (B) may further include sub-partitions such as Patch_b, dtbo_b, and vbmeta_b. For another example, the dynamic partition (Super) may further include sub-partitions such as version and preload.

When an electronic device 130 starts, the electronic device 130 needs to start from a static partition. For example, if the electronic device 130 starts from the static partition (A), the electronic device 130 sequentially loads the basic partition (Common), the static partition (A), and the dynamic partition (Super). For another example, if the electronic device 130 starts from the static partition (B), the electronic device 130 sequentially loads the basic partition (Common), the static partition (B), and the dynamic partition (Super).

The static partition (A), the static partition (B), and the dynamic partition (Super) may be used to store data of an image file (hereinafter collectively referred to as image data for short) of the operating system. For example, the image file boot.img is stored in the boot_a sub-partition of the static partition (A).

In practice, there is usually a requirement to expand the image file (for example, an img file). For example, if a new feature needs to be added to the image file, the image file needs to be expanded, or otherwise, the new feature cannot be accommodated. It should be understood that, after the image file is expanded, a larger storage space is usually required to store corresponding image data.

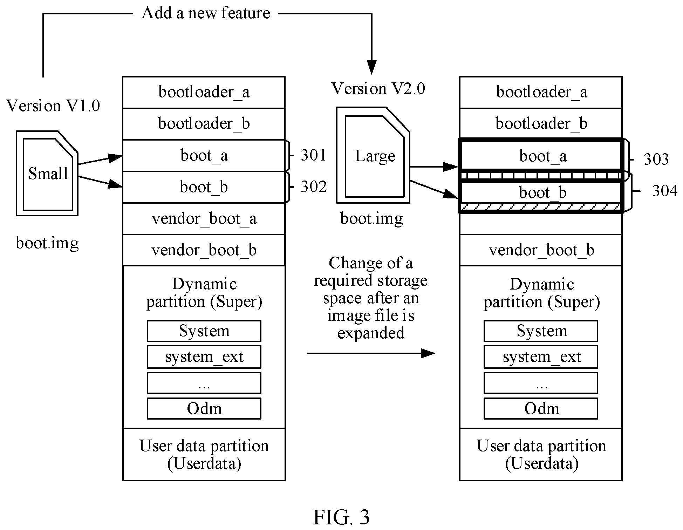

For example, distribution deployment of the data storage structure is shown on the left in FIG. 3. For example, a storage space of the boot_a sub-partition in the static partition (A) is a space 301, and a storage space of the boot_b sub-partition in the static partition (B) is a space 302. Data of the image file boot.img is stored in the space 301 and the space 302. In an operating system of a current version (for example, a version V1.0), a data volume of the image file boot.img is small. However, in an operating system of a target version (for example, a version V2.0), a new feature is added to the image file boot.img, resulting in a larger data volume of the image file boot.img. Then, the storage space required for the data of the image file boot.img also increases correspondingly. For example, a storage space of the boot_a sub-partition required for the data of the image file boot.img is changed from the space 301 to a space 303, and a storage space of the boot_b sub-partition required for the data of the image file boot.img is changed from 302 to a space 304.

It should be understood that, the image data occupies a larger storage space, and may cover a storage space located below. Still using FIG. 3 as an example, if the storage space of the boot_a sub-partition required for the data of the image file boot.img is changed from the space 301 to the space 303, data of the boot_b sub-partition located below the boot_a sub-partition may be covered, as shown in the vertical hatched area in FIG. 3. For another example, if the storage space of the boot_b sub-partition required for the data of the image file boot.img is changed from the space 302 to the space 304, data of the vendor_boot_a sub-partition located below the boot_b sub-partition may be covered, as shown in the oblique hatched area in FIG. 3.

However, the existing virtual A/B OTA upgrading solution mainly focuses on how to write upgrade data (such as the image data) in an upgrade package into the static partition and the dynamic partition (Super), and cannot resolve the problem that the data in the storage space located below is covered after the image file shown in FIG. 3 is expanded.

In other words, the existing virtual A/B OTA upgrading solution can complete only upgrading of the operating system under a limit of existing partition deployment, such as the limit of the partition deployment shown on the left in FIG. 3. Usually, in the face of the problem shown in FIG. 3, a new product needs to be released to meet a requirement. For example, a new mobile phone is released, and partition deployment is adjusted properly in the new mobile phone.

Based on this, embodiments of this application provide a method for upgrading an operating system. The electronic device 130 may adjust partition deployment in a recovery (recovery) mode, so that the adjusted partition deployment meets a new requirement for a storage space in the operating system of the target version. Adjusting the partition deployment includes one or more operations of adding a partition, deleting a partition, modifying a name of a partition, and adjusting a partition size and/or an address (including a start address and/or an end address) of a partition.

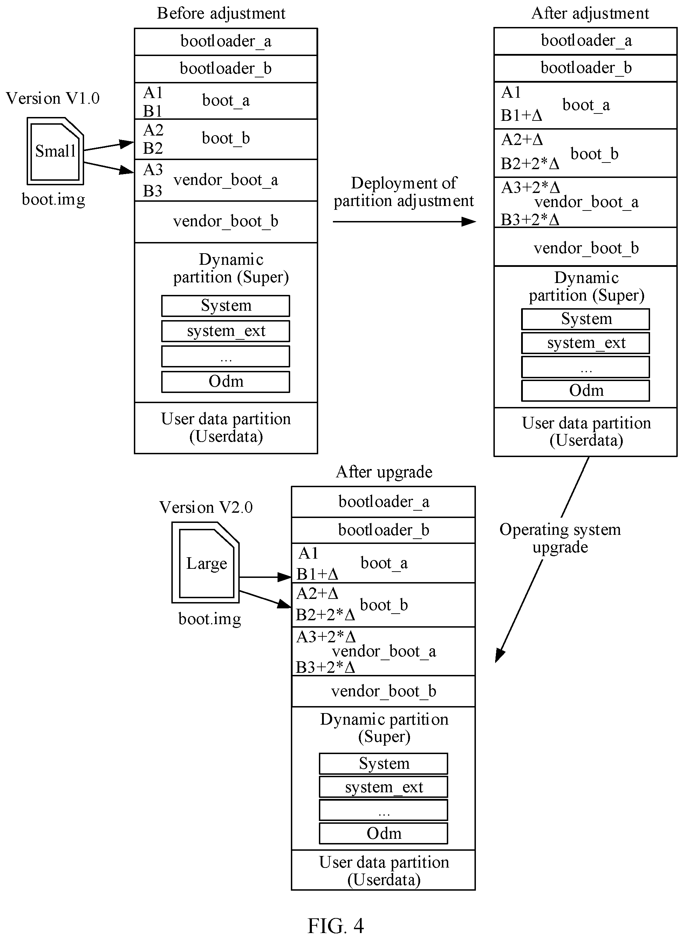

Adjusting the partition size of the partition is used as an example. The boot_a sub-partition and the boot_b sub-partition are used to store data of the image file boot.img in the operating system. Referring to FIG. 4, before adjustment, the boot_a sub-partition and the boot_b sub-partition store the data of the image file boot.img in the operating system of the current version (for example, the version V1.0). In addition, a start address of the boot_a sub-partition is A1, and an end address of the boot_a sub-partition is B1, that is, a partition size of the boot_a sub-partition is in a range of B1 to A1. A start address of the boot_b sub-partition is A2, and an end address of the boot_b sub-partition is B2, that is, a partition size of the boot_b sub-partition is in a range of B2 to A2. In addition, a start address of the vendor_boot_a sub-partition is A3, and an end address of the vendor_boot_a sub-partition is B3, that is, a partition size of the vendor_boot_a sub-partition is in a range of B3 to A3.

However, in the operating system of the target version (for example, the version V2.0), a new feature is added to the image file boot.img. Therefore, the data of the image file boot.img requires a larger storage space, for example, a storage space of Δ needs to be increased. Then, the partition deployment may be adjusted. Still referring to FIG. 4, after the adjustment, the start address of the boot_a sub-partition is still A1, and the end address of the boot_a sub-partition is adjusted to B1+Δ. In this case, the partition size of the boot_a sub-partition is B1-A1+Δ. That is, the partition size of the boot_a sub-partition is increased by Δ, so that the image data obtained through adding the new feature can be accommodated. The start address of the boot_b sub-partition is adjusted to A2+Δ, to avoid an overlap between the boot_a sub-partition and the boot_b sub-partition. If the end address of the boot_b sub-partition is adjusted to B2+2*Δ, the partition size of the boot_a sub-partition is (B2+2*Δ)-(A2+Δ)=B2-A2+Δ. That is, the partition size of the boot_b sub-partition is increased by Δ, so that the image data obtained through adding the new feature can also be accommodated. In addition, the start address of the vendor_boot_a sub-partition is adjusted to A3+2*Δ, to avoid an overlap between the boot_b sub-partition and the vendor_boot_a sub-partition. If the end address of the vendor_boot_a sub-partition is adjusted to B3+2*Δ, the partition size of the vendor_boot_a sub-partition remains (B3+2*Δ)-(A3+2*Δ)=B3-A3. That is, the partition size of the vendor_boot_a sub-partition remains unchanged, so that it can be ensured that the image file currently stored in the vendor_boot_a sub-partition is accommodated.

After adjustment of the partition deployment is completed, the electronic device 130 may exit the recovery mode, and store, during normal operation, the upgrade data based on the upgrade package into each sub-partition after the partition deployment is adjusted, to complete upgrading of the operating system. The upgrade package is used to upgrade the operating system to the operating system of the target version. In this way, image data in the operating system of the target version can be stored in the partitions, and data of adjacent sub-partitions do not overlay each other either.

Still referring to FIG. 4, after adjustment, the data of the image file boot.img (namely, the expanded image file boot.img) in the operating system of the version V2.0 may be stored in the boot_a sub-partition and the boot_b sub-partition. In addition, because storage spaces of adjacent two of the boot_a sub-partition, the boot_b sub-partition, and the vendor_boot_a sub-partition do not overlap, a problem of data coverage does not occur.

Certainly, it should be noted that, in some scenarios, the partition deployment is adjusted only to optimize the storage space. For example, a partition size of a partition is reduced, so that an idle storage space is released to the user data partition (Userdata). In these scenarios, the partition deployment is adjusted not to meet a requirement of the operating system of the target version (for example, the version V2.0) for the storage space. Therefore, for these scenarios, the method for upgrading an operating system provided in embodiments of this application may include only a process of adjusting the partition deployment, but does not include a process of upgrading the operating system to the target version based on the upgrade package. An example in which the operating system is upgraded to the target version based on the upgrade package immediately after the partition deployment is adjusted is mainly used for description below.

For example, the electronic device 130 in embodiments of this application includes, but is not limited to, devices such as a mobile phone, a headset, a tablet computer, a smart refrigerator, or a smart speaker on which the operating system may be installed. Alternatively, the electronic device 130 may be a control board on which an operating system may be installed in the electronic device 130. In addition, in embodiments of this application, the operating system includes but is not limited to iOS, Android, Harmony, Windows, Linux, or another operating system.

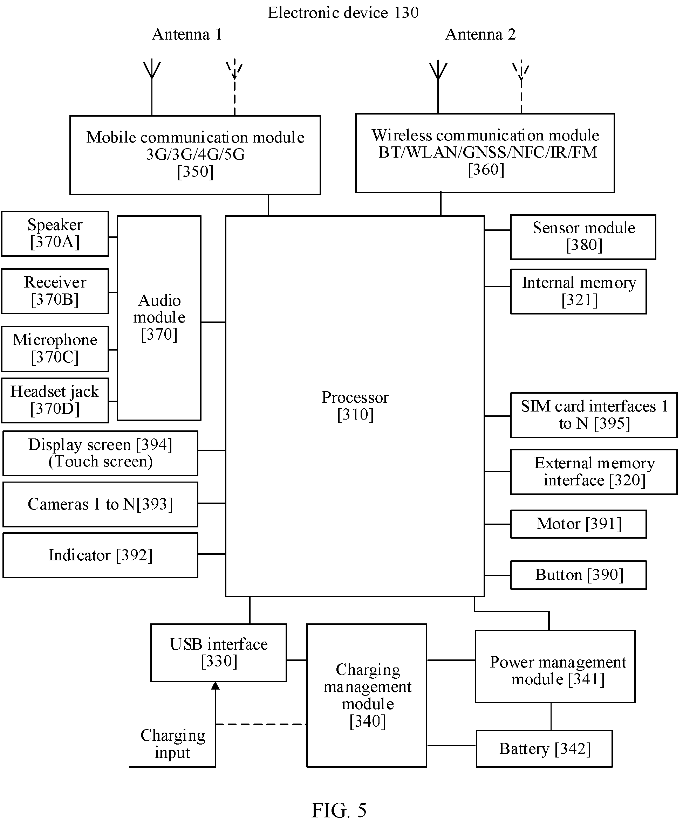

FIG. 5 is a diagram of a hardware structure of an electronic device 130 according to an embodiment of this application. As shown in FIG. 5, an example in which the electronic device 130 is a mobile phone is used. The electronic device may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, and an audio module 370, a speaker 370A, a receiver 370B, a microphone 370C, a headset jack 370D, a sensor module 380, a button 390, a motor 391, an indicator 392, a camera 393, a display screen 394, a subscriber identity module (subscriber identity module, SIM) card interface 395, and the like.

It may be understood that the schematic structure in this embodiment constitutes no specific limitation on the electronic device. In some other embodiments, the electronic device may include more or fewer components than those shown in the figure, or some components may be combined, or some components may be split, or components are arranged in different manners. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

It may be understood that a schematic interface connection relationship between the modules in this embodiment is merely an example for description, and constitutes no limitation on the structure of the electronic device. In some other embodiments, the electronic device may alternatively use an interface connection manner different from that in the foregoing embodiment, or use a combination of a plurality of interface connection manners.

The charging management module 340 is configured to receive a charging input from a charger. The charger may be a wireless charger or a wired charger. In some embodiments of wired charging, the charging management module 340 may receive a charging input from the wired charger through the USB interface 330. In some embodiments of wireless charging, the charging management module 340 may receive a wireless charging input through a wireless charging coil of the electronic device. When charging the battery 342, the charging management module 340 may further supply power to the electronic device through the power management module 341.

The power management module 341 is configured to connect to the battery 342, the charging management module 340, and the processor 310. The power management module 341 receives an input of the battery 342 and/or the charging management module 340, to supply power to the processor 310, the internal memory 321, an external memory, the display screen 394, the camera 393, the wireless communication module 360, and the like. The power management module 341 may be further configured to monitor parameters such as a battery capacity, a cycle count of a battery, and a battery health state (leakage and impedance). In some other embodiments, the power management module 341 may alternatively be disposed in the processor 310. In some other embodiments, the power management module 341 and the charging management module 340 may be further configured in a same device.

A wireless communication function of the electronic device may be implemented through the antenna 1, the antenna 2, the mobile communication module 350, the wireless communication module 360, the modem processor, and the baseband processor.

The wireless communication module 360 may provide a solution to wireless communication applied to the electronic device, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 360 may be one or more devices integrating at least one communication processing module. The wireless communication module 360 receives an electromagnetic wave through the antenna 2, performs frequency modulation and filtering processing on an electromagnetic wave signal, and sends a processed signal to the processor 310. The wireless communication module 360 may also receive a to-be-sent signal from the processor 310, perform frequency modulation and amplification on the to-be-sent signal, and convert the signal into an electromagnetic wave for radiation through the antenna 2.

The electronic device implements a display function by using the GPU, the display screen 394, the application processor, and the like. The GPU is a microprocessor for image processing, and is connected to the display screen 394 and the application processor. The GPU is configured to perform mathematical and geometric calculations and to render graphics. The processor 310 may include one or more GPUs and execute program instructions to generate or change display information.

The electronic device can implement a photographing function by using the ISP, the camera 393, the video codec, the GPU, the display screen 394, the application processor, and the like. The ISP is configured to process data fed back by the camera 393. The camera 393 is configured to capture a static image or a video. An optical image of an object is generated through the lens, and is projected onto the photosensitive element. In some embodiments, the electronic device may include 1 or N cameras 393, where N is a positive integer greater than 1.

The external memory interface 320 may be configured to connect to an external storage card such as a micro SD card, to expand a storage capability of the electronic device. The external memory card communicates with the processor 310 through the external memory interface 320, to implement a data storage function. For example, files such as music and videos are stored in the external storage card.

The internal memory 321 may be configured to store computer-executable program code. The executable program code includes instructions. The processor 310 runs the instruction stored in the internal memory 321, to perform various function applications and data processing of the electronic device. For example, the processor 310 may perform an operation of upgrading an operating system by executing instructions stored in the internal memory 321. The internal memory 321 may include a program storage area and a data storage area. The program storage area may store an operating system, an application required by at least one function (for example, a sound playback function or an image playback function), and the like. The data storage area may store data (for example, audio data and an address book) and the like created when the electronic device is used. In addition, the internal memory 321 may include a highspeed random access memory, or may include a non-volatile memory such as at least one magnetic disk memory, a flash memory, or a universal flash storage (universal flash storage, UFS). It should be understood that, the internal memory 321 may be disposed inside the processor 310, or the internal memory 321 may be independently disposed outside the processor 310.

In a specific implementation, the internal memory 321 may include a ROM and a random access memory (Random Access Memory, RAM). In actual application, the RAM may also be referred to as a "main memory". The RAM can be read/written at any time and at a fast speed, and is usually used as a temporary data storage medium of an operating system or another running program. When power is turned off, the RAM cannot retain data, that is, the RAM usually stores temporary data during running of the electronic device. The ROM may also be referred to as a "non-volatile memory". The data stored in the ROM is generally written in advance before being loaded into the whole machine, for example, image data in the operating system and user data generated when a user uses the electronic device. The ROM can only be read during operation of the whole machine, and cannot be quickly and conveniently overwritten like the RAM. Therefore, the data stored in the ROM is stable, and the stored data is not changed after power is turned off.

In this application, the ROM may use a virtual A/B data storage structure similar to the virtual A/B data storage structure shown in FIG. 1. In the electronic device, a total partition table (Ptable, referred to as a partition table for short) may be used to describe partition deployment of the virtual A/B data storage structure in the ROM. For example, the partition table is stored in a universal flash storage (Universal Flash Storage, UFS). After the electronic device starts, the partition table may be queried from the UFS, to obtain the partition deployment of the data storage structure in the ROM. The partition table includes a basic partition (Common), a static partition (A), a static partition (B), a dynamic partition (Super), and a start address and an end address of a user data partition (Userdata). For example, a part of data in the partition table is shown in Table 1 below.

**Table 1**

| Partition (Partition) | Name (Name) | Size (Size) | Start address (Start address)-End address (End address) |
|---|---|---|---|
| 0 | Global unique identity partition table (GUID partition table, GPT) | | 0x00000000-0x000000FF |
| 1 | x-loader_a | 256 KB | 0x00000100-0x00000 X₁X₂X₃ |
| 2 | x-loader_b | 256 KB | 0x00000 X₄X₅X₆-0x00000 X₇X₈X₉ |
| 3 | bootloader_a | 600 KB | 0x000000 Y₁Y₂Y₃-0x00000 Y₄Y₅Y₆ |
| 4 | bootloader_b | 600 KB | 0x000000 Y₇Y₈Y₉-0x00000 Y₁₀Y₁₁Y₁₂ |
| 5 | boot_a | 32 MB | 0x00000 Z₁Z₂Z₃-0x00000 Z₄Z₅Z₆ |
| 6 | boot_b | 32 MB | 0x00000 Z₇Z₈Z₉-0x00000 Z₁₀Z₁₁Z₁₂ |
| 7 | Patch_a | 128 MB | 0x00000 P₁P₂P₃-0x00000 P₄P₅P₆ |
| 8 | Patch_b | 128 MB | 0x00000 P₇P₈P₉-0x00000 P₁₀P₁₁P₁₂ |
| 5 | Super | 8 GB | 0x00000 Q₁Q₂Q₃-0x0000 Q₄Q₅Q₆Q₇ |
| 6 | User data | 128 GB | 0x0000 W₁W₂W₃W₄-0x0000 W₅W₆W₇W₈ |

The x-loader sub-partition in Table 1 is used as an example. Table 1 may represent that a partition size of the x-loader _a sub-partition in the static partition (A) is 256 KB, a start address of the x-loader_a sub-partition in a storage space is 0x00000100, and an end address of the x-loader_a sub-partition is 0x00000 X₁X₂X₃; and a partition size of the x-loader _b sub-partition in the static partition (B) is 256 KB, a start address of the x-loader_b sub-partition in the storage space is 0x00000 X₄X₅X₆, and an end address of the x-loader_b sub-partition is 0x00000 X₇X₈X₉.

It should be noted that, the partition table may describe the partition deployment. Therefore, in this application, the partition deployment may be adjusted by adjusting the partition table. For example, partition deployment of the sub-partition in the storage space is adjusted by modifying a start address and an end address of a sub-partition in the partition table. In short, adjusting the partition table is adjusting the partition deployment.

It should be noted that, for the basic partition, the static partition (A), and the static partition (B), a partition name, a partition size, a start address, and an end address of each sub-partition are described in the partition table. However, for the dynamic partition (Super), only a partition size, a start address, and an end address of the dynamic partition (Super) as a whole are described in the partition table. For example, in Table 1, an overall partition size of the dynamic partition (Super) is 8 GB, a start address of the dynamic partition is 0x00000 Q₁Q₂Q₃, and an end address of the dynamic partition is 0x0000 Q₄Q₅Q₆Q₇. Address information of each sub-partition (for example, a system sub-partition) in the dynamic partition (Super) is stored in metadata (/supermetadata) at a header of the dynamic partition (Super). Therefore, for the dynamic partition (Super), in this application, the partition deployment is adjusted by adjusting the partition table, which can only be adjusted for the dynamic partition (Super) as a whole. For example, the start address and the end address of the dynamic partition (Super) as a whole are changed.

In addition, in the metadata (/supermetadata) at the header of the dynamic partition (Super), recorded address information of each sub-partition (for example, a system sub-partition) in the dynamic partition (Super) is represented by using an offset. That is, the address information represents relative locations of the sub-partitions (for example, the system sub-partitions) in the dynamic partition (Super). Therefore, after the dynamic partition (Super) is adjusted as a whole, locations of the sub-partitions in the dynamic partition (Super) on the ROM may change accordingly.

In other words, in this application, adjustment of the partition table includes adjustment of the sub-partitions in the basic partition (Common), the static partition (A), and the static partition (B), and may further include adjustment of the dynamic partition (Super) as a whole. Therefore, adjustment of the partition deployment is implemented. The solution of this application is mainly described by using the adjustment of the sub-partitions in the static partition (A) and the static partition (B) as an example below.

For ease of description, the partition name, the partition size, the start address, and the end address may be collectively referred to as partition information.

The electronic device may implement an audio function by using the audio module 370, the speaker 370A, the receiver 370B, the microphone 370C, the headset jack 370D, the application processor, and the like, for example, implement a music playback function and a recording function.

The button 390 includes a power button, a volume button, and the like. The button 390 may be a mechanical button, or may be a touch button. The electronic device may receive a key input, and generate a key signal input related to user setting and function control of the electronic device. The motor 391 may generate a vibration prompt. The motor 391 may be configured to provide an incoming call vibration prompt and a touch vibration feedback. The indicator 392 may be an indicator light, and may be configured to indicate a charging status and a power change, or may be configured to indicate a message, a missed call, a notification, and the like. The SIM card interface 395 is configured to connect to a SIM card. The SIM card may be inserted into the SIM card interface 395 or unplugged from the SIM card interface 395, to come into contact with or be separated from the electronic device. The electronic device may support one or N SIM card interfaces, and N is a positive integer greater than 1.

The following further describes the solution provided in embodiments of this application with reference to the accompanying drawings and by using the upgrading system shown in FIG. 1 and the electronic device shown in FIG. 5 as an example.

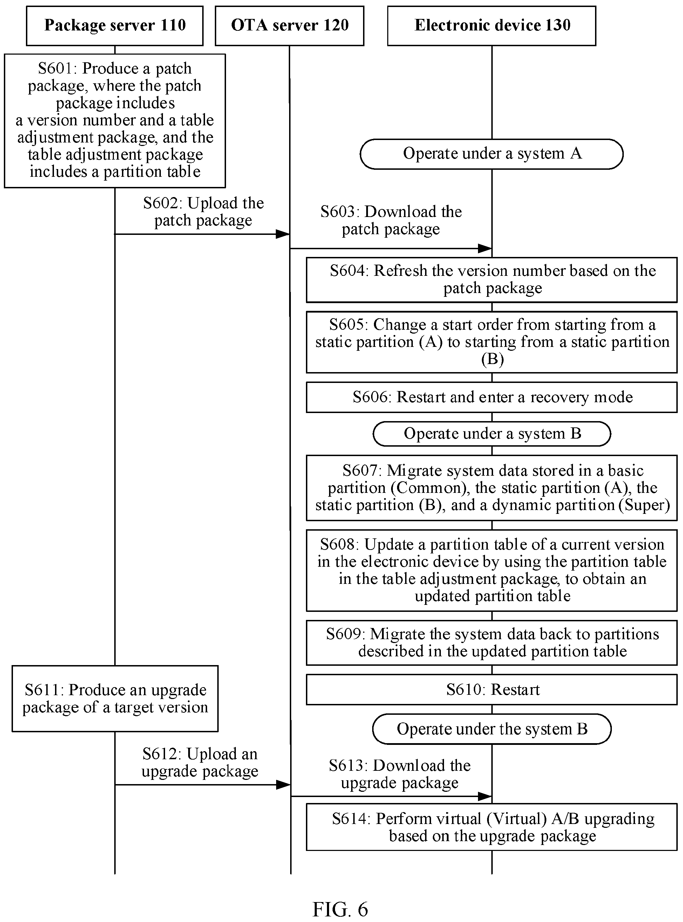

FIG. 6 is a flowchart of a method for upgrading an operating system according to an embodiment of this application. As shown in FIG. 6, an example in which an electronic device 130 currently starts from a static partition (A) is used. That is, an example in which the electronic device 130 runs under a system (which may be referred to as a system A) formed by image files in the static partition (A) and a dynamic partition (Super) is used. The method for upgrading an operating system includes:

S601: A package server 110 produces a patch package, where the patch package includes a version number and a table adjustment package, and the table adjustment package includes a partition table.

The version number is a version number (which may also be referred to as a first version number) of an intermediate version, and the intermediate version is a version obtained through repairing an operating system of a current version by using the patch package. For example, if a version (which may be referred to as a current version, or may be referred to as a first version) of a current operating system is a version V1.0, and a version obtained through repairing the current operating system by using the patch package is a version V1.1, the intermediate version is the version V1.1.

In this application, the patch package includes the version number and the table adjustment package, and is used to adjust the partition table. The version number indicates the intermediate version. The table adjustment package is used as a basis for adjusting partition deployment. The table adjustment package includes a partition table (which may also be referred to as a second partition table), that is, includes the partition table shown in Table 1. The partition table can describe partition deployment of a virtual A/B data storage structure in an intermediate version (which may also be referred to as a second version), namely, partition deployment of a basic partition (Common), the static partition (A), a static partition (B), a dynamic partition (Super), and a user data partition (Userdata). That is, a requirement of an operating system of a target version for a storage space.

For example, a data structure of the patch package is as follows.
ptablechange.tag;
META-INF;
payload.bin;
payload_properties.txt;
SOFTWARE_VER.mbn;
update _base_ptable_change.zip; and
VERSION.mbn.

ptablechange.tag is a tag of adjusting a partition table, and indicates that the patch package may be used to adjust the partition deployment. payload.bin includes partition information of a sub-partition involved in repairing an operating system based on the patch package. update _base_ptable_change.zip is the table adjustment package.

For example, a data structure of the table adjustment package (namely, update _base_ptable_change.zip) is as follows.
Ptable;
META-INF;
OTA_update.tag;
skipauth_pkg.tag;
vendor_country.mbn; and
change_detail.mbn.

Ptable is a partition table, and a structure of Ptable is shown in Table 1. change_detail.mbn is a file of a changed partition table, and is used to describe a partition change of a partition table of an intermediate version in comparison to a partition table (which may also be referred to as a first partition table) of a current version. The change includes, but is not limited to, one or more of adding a partition, deleting a partition, and modifying a partition name.

For example, change_detail.mbn includes add: xbl_dump, which is used to describe a case that an xbl_dump sub-partition is added to the partition table of the intermediate version in comparison to the partition table of the current version.

For ease of description, a newly added partition (for example, the xbl_dump sub-partition) may be referred to as a first partition. That is, the partition table in the table adjustment package includes partition information of the first partition, but the partition table of the current version does not include the partition information of the first partition. In addition, information (for example, add: xbl_dump) indicating a newly added partition in change _detail.mbn may be referred to as first indication information.

For another example, change_detail.mbn includes delete: abl_test, which is used to describe a case that an abl_test sub-partition is deleted in the partition table of the intermediate version in comparison to the partition table of the current version.

Similarly, for ease of description, a deletion partition (for example, the abl_test sub-partition) may be referred to as a second partition. That is, the partition table of the current version includes partition information of the second partition, but the partition table in the table adjustment package does not include the partition information of the second partition. In addition, information (for example, delete: abl_test) indicating a deletion partition in change_detail.mbn may be referred to as second indication information.

For another example, change_detail.mbn includes change: abl_reserve, abl, and is used to describe a case that a name abl_reserve of a sub-partition in the partition table of the current version is modified to a name abl of a sub-partition in the partition table of the intermediate version.

Similarly, for ease of description, a partition (for example, an abl_restore sub-partition) before name modification in the partition table of the current version may be referred to as a third partition, and a partition (for example, an abl sub-partition) before name modification in the partition table in the table adjustment package may be referred to as a fourth partition. That is, the third partition in the partition table of the current version is renamed as the fourth partition in the partition table in the table adjustment package. Generally, changing a partition name does not affect a function of the partition. Therefore, a function of the fourth partition is generally the same as that of the third partition. For example, both the fourth partition and the third partition are used to store the same data, for example, store data of an image file abl_test.img. In addition, information indicating name modification (for example, change: abl_reserve, abl) in change_detail.mbn may be referred to as third indication information.

The package server 110 may determine the partition table of the intermediate version based on a data volume of each image file in the operating system of the target version, to obtain the patch package through production.

Still using FIG. 4 as an example, in the operating system of the target version, the data of the image file boot.img is increased by Δ. Then, in the partition table of the intermediate version, both the partition size of the boot_a sub-partition and the partition size of the boot_b sub-partition should be increased by Δ. Therefore, it may be determined that both the end address of the boot_a sub-partition and the start address of the boot_b sub-partition move backward by Δ. That is, in the partition table of the intermediate version, the end address of the boot_a sub-partition is B1+Δ, and the start address of the boot_b sub-partition is A2+Δ. It may be further determined that, the end address of the boot_b sub-partition and a start address and an end address of each sub-partition after the boot_b sub-partition move backward by 2*Δ. In this way, the partition table of the intermediate version can be obtained.

S602: The package server 110 uploads the patch package to an OTA server 120.

After producing the patch package, the package server 110 may send the patch package to the OTA server 120, so that the OTA server 120 manages the patch package in a uniform manner.

S603: The electronic device 130 downloads the patch package from the OTA server 120.

The OTA server 120 may actively push a download address of the patch package to the electronic device 130 for the electronic device 130 to download. Alternatively, the electronic device 130 may send a package search request to the OTA server 120, and the OTA server 120 sends a download address of the patch package to the electronic device 130 based on the package search request. After obtaining the download address, the electronic device 130 may obtain the patch package by downloading.

S604: The electronic device 130 refreshes the version number based on the patch package.

In this application, after obtaining the patch package, the electronic device 130 may refresh a version number of the operating system in the electronic device 130 to a version number carried in the patch package, namely, a version number of the intermediate version. For example, V1.0 is refreshed to V1.1.

For example, the patch package includes payload.bin, and payload.bin includes partition information of a sub-partition involved in repairing the operating system based on the patch package. A main function of the patch package is patching. In this case, an involved partition naturally includes a patch (Patch) sub-partition in the static partition. Therefore, partition information of the patch sub-partition, such as a partition name "Patch", may be obtained from payload.bin of the patch package. The electronic device 130 may write the version number of the intermediate version into the patch sub-partition, to refresh the version number.

It should be understood that, if the electronic device 130 currently starts from the static partition (A), the version number of the intermediate version needs to be written into a Patch_b sub-partition of the static partition (B). In this way, impact on the running system A can be avoided.

The version number is refreshed, so that the electronic device 130 may subsequently request the OTA server 120 carrying the refreshed version number for the patch package, to further perform repairing on the operating system of the electronic device 130. Alternatively, the electronic device 130 may subsequently request an upgrade package from the OTA server 120 carrying the refreshed version number, to upgrade the operating system of the electronic device 130. For example, the refreshed version number is V1.1. Then, after the electronic device 130 completes repairing on the operating system based on the patch package, the electronic device 130 may send the package search request to the OTA server 120 carrying V1.1. The OTA server 120 compares the V1.1 carried in the package search request with a latest version number (for example, V2.0) in the OTA server 120, and finds that there is a latest updated version in comparison to V1.1. In this case, the OTA server 120 may provide a download address of the upgrade package of the operating system of the version V2.0 for the electronic device 130, for the electronic device 130 to download updates.

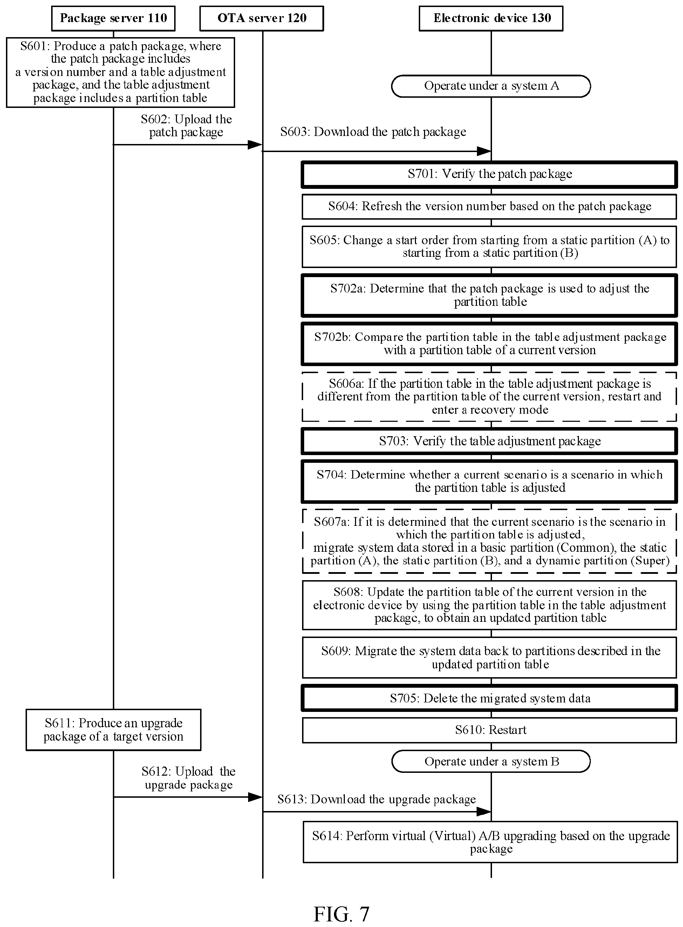

In some embodiments, referring to FIG. 7, before S604, S701 may be further included.

S701: The electronic device 130 verifies the patch package.

For example, the patch package includes a digital signature (META-INF) of the patch package. The electronic device 130 may verify whether the META-INF of the patch package is legitimate, to confirm whether the patch package is legitimate. For specific implementation details, refer to the related art. Details are not described herein again.

In this way, after it is determined that the patch package is legitimate, the operating system may be further repaired based on the patch package. For example, S604 and subsequent steps thereof are performed only after it is determined that the patch package is legitimate in S701. In this way, improper processing of an illegitimate patch package can be avoided.

S605: The electronic device 130 changes a start order from starting from the static partition (A) to starting from the static partition (B).

The electronic device 130 currently starts from the static partition (A), that is, the electronic device 130 runs under a system (namely, the system A) formed by image data in the static partition (A) and the dynamic partition (Super). Similarly, the electronic device 130 starts from the static partition (B), that is, the electronic device 130 runs under a system (which may be referred to as a system B) formed by image data in the static partition (B) and the dynamic partition (Super).

The electronic device 130 changes the start order from starting from the static partition (A) to starting from the static partition (B), so that the electronic device 130 starts from the static partition (B), that is, runs under an operating system B when the electronic device 130 starts next time. In addition, when starting from the static partition (B), the electronic device 130 may read a latest version number from the Patch_b sub-partition of the static partition (B), and the latest version number is used to request the upgrade package.

A universal flash storage (Universal Flash Storage, UFS) in a master boot record (Master Boot Record, MBR) format is used as an example. In the MBR of the UFS (primary boot sector, the first sector of the UFS, that is, cylinder 0 head 0 sector 1 of a C/H/S address), a device start order description is stored. For example, a start order flag is A, indicating starting from the static partition (A); and a start order flag is B, indicating starting from the static partition (B). After the device starts, a device start order is first read from the MBR of the UFS, to determine whether to start from the static partition (A) or the static partition (B). Therefore, the electronic device 130 may overwrite the start order flag in the MBR from A to B.

It should be noted that, changing the start order from starting from the static partition (A) to starting from the static partition (B) only indicates that the electronic device 130 starts from the static partition (B) next time. That is, the electronic device 130 runs under the system B after starting next time. It does not take effect immediately. In other words, after changing the start order from starting from the static partition (A) to starting from the static partition (B), the electronic device 130 does not immediately switch from the system A to the system B.

It should be noted that, S604 and S605 are performed, so that the electronic device 130 can read the version number of the intermediate version, thereby facilitating a subsequent request for the upgrade package. Certainly, based on the foregoing descriptions, it can be learned that, in some scenarios, the patch package may be used only for optimizing distribution and deployment, and the operating system does not need to be upgraded to the target version subsequently. In this case, the upgrade package does not need to be requested. Therefore, in these scenarios, step S604 and step S605 may also be omitted.

S606: The electronic device 130 restarts and enters a recovery mode.

Because the start order has been changed from starting from the static partition (A) to starting from the static partition (B), when the electronic device 130 restarts, the electronic device 130 starts from the static partition (B), and can run under the system B. This restart may also be referred to as a first restart after the patch package is obtained.

In this application, the electronic device 130 needs to complete an operation of adjusting the partition table in the recovery mode. Therefore, in this restart, the electronic device 130 further needs to trigger entering the recovery mode. For example, an example in which the operating system is Android is used. The electronic device 130 may control the electronic device 130 to restart and enter the recovery mode by using the following restart instruction:
property_set (ANDROID_RB_PROPERTY, "reboot, recovery").

After entering the recovery mode, the electronic device 130 may perform processing of adjusting the partition table, which is shown in S607 to S609 below.

In practice, the patch package may be used to repair a vulnerability of data or an operating system in the electronic device 130, rather than merely adjust the partition table. Based on this, in some embodiments, referring to FIG. 7, before S606, the electronic device 130 first needs to determine that the patch package is used to adjust the partition table, that is, S702a is further included.

S702a: The electronic device 130 determines that the patch package is used to adjust the partition table.

The patch package used to adjust the partition table usually includes a tag (which may also be referred to as a first tag) indicating to adjust the partition table, for example, a tag ptablechange.tag. In addition, the patch package used to adjust the partition table generally further includes a small package with a preset table adjustment package name (which may also be referred to as a data packet with a preset name). For example, the preset table adjustment package name is update_base_ptable_change.zip. The preset table adjustment package name indicates the table adjustment package.

Based on this, the electronic device 130 may search the patch package for a tag indicating to adjust the partition table and a small package whose name is the preset table adjustment package. If the tag indicating to adjust the partition table and the small package whose name is the preset table adjustment package is found, it may be determined that the patch package is used to adjust the partition table. On the contrary, if the tag indicating to adjust the partition table or the small package whose name is the preset table adjustment package is not found, it may be determined that the patch package is not used to adjust the partition table.

Certainly, the electronic device 130 may alternatively search only the tag indicating to adjust the partition table. If the tag indicating to adjust the partition table is found, it is determined that the patch package is used to adjust the partition table. Alternatively, the electronic device 130 may alternatively search only a small package whose name is the preset table adjustment package. If the small package whose name is the preset table adjustment package is found, it is determined that the patch package is used to adjust the partition table. This is not specifically limited in embodiments of this application.

In this embodiment, after determining that a function of the patch package is to adjust the partition table, the electronic device 130 restarts and enters the recovery mode. The electronic device 130 avoids mistakenly entering the recovery mode when the patch package is used in another case that the recovery mode does not need to be used.

In some scenarios, although the electronic device 130 receives the patch package used to adjust the partition table, the partition table in the table adjustment package may be erroneous, for example, the partition table in the table adjustment package is not the partition table of the intermediate version. In this case, it is clearly unreasonable to restart and enter the recovery mode and further perform processing of adjusting the partition table.

Based on this, in some embodiments, referring to FIG. 7, before S606, S702b and S703 are further included.

S702b: The electronic device 130 compares the partition table in the table adjustment package with the partition table of the current version.

The partition table of the current version refers to a partition table of an operating system currently run by the electronic device 130. For example, the electronic device 130 may obtain the partition table of the current version from the UFS.

When comparing the partition table in the table adjustment package with the partition table of the current version, the electronic device 130 may compare whether partitions included in the table adjustment package and the partition table of the current version are the same, and whether sizes and start addresses and end addresses of the partitions are the same. If any one of the foregoing items is different, it is determined that the partition table in the table adjustment package is different from the partition table of the current version. If all the items are the same, it is determined that the partition table in the table adjustment package is the same as the partition table of the current version.

If the partition table in the table adjustment package is the same as the partition table of the current version, it indicates that the partition table in the table adjustment package is the partition table of the current version and does not change. In this case, it is considered that an anomaly occurs, and there is no need to enter the recovery mode and further perform processing of adjusting the partition table, that is, there is no need to perform S606 and subsequent steps thereof.

On the contrary, if the partition table in the table adjustment package is different from the partition table of the current version, it indicates that the partition table in the table adjustment package is changed compared with the partition table of the current version. In this case, there is a need to enter the recovery mode and further perform processing of adjusting the partition table.

Correspondingly, still referring to FIG. 7, S606 is specifically S606a.

S606a: If the partition table in the table adjustment package is different from the partition table of the current version, the electronic device 130 restarts and enters the recovery mode.

In this embodiment, the electronic device 130 may enter the recovery mode only when the partition table in the table adjustment package is updated compared with the partition table of the current version. In this way, the electronic device 130 may enter the recovery mode only when there is a requirement to adjust the partition table.

In addition, in this embodiment, an execution occasion of S605 is not limited by FIG. 7. During actual implementation, before starting next time, the electronic device 130 only needs to change a start order from starting from the static partition (A) to starting from the static partition (B). That is, S605 may be performed at any moment between S604 and before the electronic device 130 starts next time (for example, S606a). In this way, it may be ensured that the electronic device 130 starts from the static partition (B) next time.

In some embodiments, referring to FIG. 7, after the recovery mode is entered, that is, after S606 is performed, S703 may be further included.

S703: The electronic device 130 verifies the table adjustment package.

For example, the table adjustment package includes a digital signature (META-INF) of the table adjustment package. The electronic device 130 may verify whether the META-INF of the table adjustment package is legitimate, to confirm whether the table adjustment package is legitimate. For specific implementation details, refer to the related art. Details are not described herein again.

In this way, after it is determined that the table adjustment package is legitimate, related processing of adjusting the partition table may be further implemented based on the table adjustment package, to avoid completing improper processing on an illegitimate table adjustment package.

S607: The electronic device 130 migrates system data in the basic partition (Common), the static partition (A), the static partition (B), and the dynamic partition (Super).

In this way, the electronic device 130 may store system data (such as image data) in an area outside the basic partition (Common), the static partition (A), the static partition (B), and the dynamic partition (Super), to facilitate subsequent retrieval. For example, the system data may be copied to the user data partition (Userdata). In this way, the system data can be migrated and operation of the recovery mode cannot be affected.

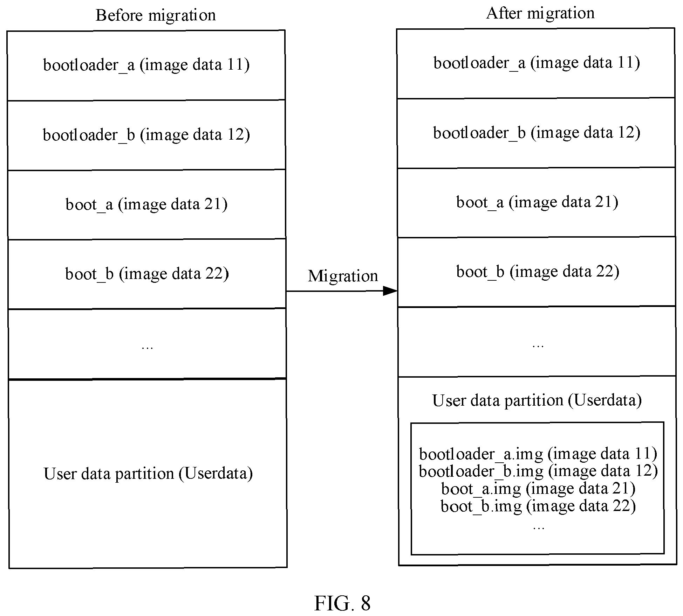

For example, referring to FIG. 8, a static partition (A) and a static partition (B) are used as an example. Before migration, image data 11 is stored in a bootloader_a sub-partition of the static partition (A), and image data 12 is stored in a bootloader_b sub-partition of the static partition (B). Image data 21 is stored in the boot_a sub-partition of the static partition (A), and image data 22 is stored in the boot_b sub-partition of the static partition (B). Still referring to FIG. 8, after migration, the image data 11, the image data 12, the image data 21, and the image data 22 are copied and stored in the user data partition (Userdata). For example, the image data 11, the image data 12, the image data 21, and the image data 22 are stored at a tail of the user data partition (Userdata).

In addition, to facilitate distinguishing between partitions in which different system data is stored during retrieval of the data, when the system data is migrated, the system data may be migrated to a file named by a name of a sub-partition. For the static partition, distinction may be made between a suffix -a and a suffix_b.

For example, still referring to FIG. 8, the image data 11 in the bootloader_a is migrated to a file named as bootloader_a.img in the user data partition (Userdata), the image data 12 in the bootloader_b is migrated to a file named as bootloader_b.img in the user data partition (Userdata), the image data 21 in the boot_a is migrated to a file named as boot_a.img in the user data partition (Userdata), and the image data 22 in the boot_b is migrated to a file named as boot_b.img in the user data partition (Userdata).

Certainly, in some other embodiments, an electronic device 130 may also distinguish storage partitions of different system data in other manners. For example, the electronic device 130 may migrate in association the system data and the name of the partition in which the system data is stored to the user data partition (Userdata). For example, the bootloader_a is stored in association with the image data 11 in the user data partition (Userdata).

In practice, in a recovery mode, various processing of data or an operating system in the electronic device 130 may be completed. For example, a standard of the electronic device 130 is modified. For another example, in this application, the recovery mode is used to adjust a partition table.

Based on this, in some embodiments, after entering the recovery mode, the electronic device 130 first needs to determine a purpose of entering the recovery mode this time, to facilitate performing corresponding processing to achieve the purpose. In this case, in a scenario in which the recovery mode is used to adjust the partition table in this application, it mainly needs to determine whether the purpose is to adjust the partition table. Specifically, referring to FIG. 7, after entering the recovery mode, S704 may be further included.

S704: The electronic device 130 determines whether a current scenario is a scenario in which the partition table is adjusted.

If small packages included in a patch package are different, purposes that can be achieved after the recovery mode is entered are different. For example, if the small package in the patch package is a standard modification package, after the recovery mode is entered, a purpose of standard modification may be achieved based on the standard modification package. For example, a demonstration standard is modified to a commercial standard. For another example, if the small package in the patch package is a table adjustment package, after the recovery mode is entered, a purpose of adjusting the partition table may be achieved based on the table adjustment package.

Based on this, in a specific implementation, the electronic device 130 may determine, based on a name of a small package (for example, the standard modification package or the table adjustment package) in the patch package, whether the current scenario is the scenario in which the partition table is adjusted.

If the name of the small package in the patch package is a preset table adjustment package (which may also be referred to as a preset name), it is determined that the current scenario is the scenario in which the partition table is adjusted. For example, if the preset table adjustment package name is update _base_ptable_change.zip, a name of the small package in the patch package is also update _base_ptable_change.zip, and the name of the small package in the patch package is the same as the preset table adjustment package name, it may be determined that the current scenario is the scenario in which the partition table is adjusted.

If the name of the small package in the patch package is not the preset table adjustment package, it is determined that the current scenario is not the scenario in which the partition table is adjusted. For example, if the preset table adjustment package name is update _base_ptable_change.zip, a name of the small package in the patch package is update_base_demochange.zip, and the name of the small package in the patch package is different from the preset table adjustment package name, it may be determined that the current scenario is not the scenario in which the partition table is adjusted.

Correspondingly, still referring to FIG. 7, in this embodiment, S607 is specifically S607a.

S607a: If it is determined that the current scenario is the scenario in which the partition table is adjusted, the electronic device 130 migrates system data in the basic partition (Common), the static partition (A), the static partition (B), and the dynamic partition (Super).

In other words, in this embodiment, migration of the system data is further performed only after it is determined that the current scenario is the scenario in which the partition table is adjusted. In this way, in a scenario in which the partition table is not adjusted, erroneous migration of the system data is avoided, which ultimately affects system operation.

S608: The electronic device 130 updates a partition table of a current version in the electronic device 130 by using a partition table in the table adjustment package, to obtain an updated partition table.

That is, partition deployment of a ROM is updated from partition deployment described by the partition table of the current version to partition deployment described by the partition table in the table adjustment package.

For example, the partition table of the current version in the electronic device 130 is shown in Table 1, and the partition table in the table adjustment package is shown in Table 2.

**Table 2**

| Partition (Partition) | Name (Name) | Size (Size) | Start address (Start address)-End address (End address) |
|---|---|---|---|
| 0 | Global unique identity partition table (GUID partition table, GPT) | | 0x00000000-0x000000FF |
| 1 | x-loader_a | 256 KB | 0x00000100-0x00000 X₁X₂X₃ |
| 2 | x-loader_b | 256 KB | 0x00000 X₄X₅X₆-0x00000 X₇X₈X₉ |
| 3 | bootloader_a | 600 KB | 0x000000 Y₁Y₂Y₃-0x00000 Y₄Y₅Y₆ |
| 4 | bootloader_b | 600 KB | 0x000000 Y₇Y₈Y₉-0x00000 Y₁₀Y₁₁Y₁₂ |
| 5 | boot_a | 64 MB | 0x00000 Z₁Z₂Z₃-0x00000 Z₄ₐZ₅ₐZ₆ₐ |
| 6 | boot_b | 64 MB | 0x00000 Z₇ₐZ₈ₐZ₉ₐ-0x00000 Z₁₀ₐZ₁₁ₐZ₁₂ₐ |
| 7 | Patch_a | 128 MB | 0x00000 P₁ₐP₂ₐP₃ₐ-0x00000 P₄ₐP₅ₐP₆ₐ |
| 8 | Patch_b | 128 MB | 0x00000 P₇ₐP₈ₐP₉ₐ-0x00000 P₁₀ₐP₁₁ₐP₁₂ₐ |
| 5 | Super | 8 GB | 0x00000 Q₁ₐQ₂ₐQ₃ₐ-0x0000 Q₄ₐQ₅ₐQ₆ₐQ₇ₐ |
| 6 | User data | 128 GB | 0x0000 W₁ₐW₂ₐW₃ₐW₄ₐ-0x0000 W₅ₐW₆ₐW₇ₐW₈ₐ |

It is clear that, in comparison to Table 1, both a partition size of the boot_a sub-partition and a partition size of the boot_b sub-partition in Table 2 are expanded from 32 MB to 64 MB, and addresses (including the start address and/or the end address) of the boot_a sub-partition and partitions after the boot_a sub-partition are correspondingly changed.

In a specific implementation, the electronic device 130 may modify the partition table of the current version to be consistent with the partition table in the table adjustment package, to obtain an updated partition table.

In another specific implementation, the electronic device 130 may alternatively replace the partition table of the current version with the partition table in the table adjustment package, to obtain an updated partition table.

After obtaining the updated partition table, the electronic device 130 may store the updated partition table, for example, store the updated partition table in a UFS for subsequent use.

S609: The electronic device 130 migrates the system data back to partitions described in the updated partition table.

In this way, before the electronic device 130 is upgraded to a target version, the image data in the operating system of the current version can still be stored in the partitions, to ensure that the electronic device 130 can run normally.

Compared with the partition table of the current version, the updated partition table includes one or more of the following change types: first, an addition partition; second, a deletion partition; third, name modification; and fourth, a case other than the first case to the third case. Corresponding to the foregoing four cases, specific implementations of retrieving system data are different.

For example, the table adjustment package includes a change_detail.mbn file. The change_detail.mbn is used to describe a partition change of a partition table of an intermediate version in comparison to the partition table of the current version. Therefore, the electronic device 130 may parse the change_detail.mbn, to determine the change type included in the updated partition table in comparison to the partition table of the current version. For details about the change_detail.mbn, refer to the foregoing related descriptions. Details are not described herein again.

The following separately describes the foregoing four cases and their corresponding retrieval manners.

First, an addition partition. That is, a first partition is added.

In a process of retrieving the system data, for a newly added partition, the electronic device 130 may query the updated partition table for a newly added sub-partition and corresponding partition information thereof, such as a partition size, a start address, and an end address. Then, the electronic device 130 clears data between the start address and the end address (which may also be referred to as a second target address range) of the newly added partition in the ROM. In this way, it can be ensured that there is no dirty data, such as no image data in the operating system of the current version, in a storage space corresponding to the newly added partition in the ROM.

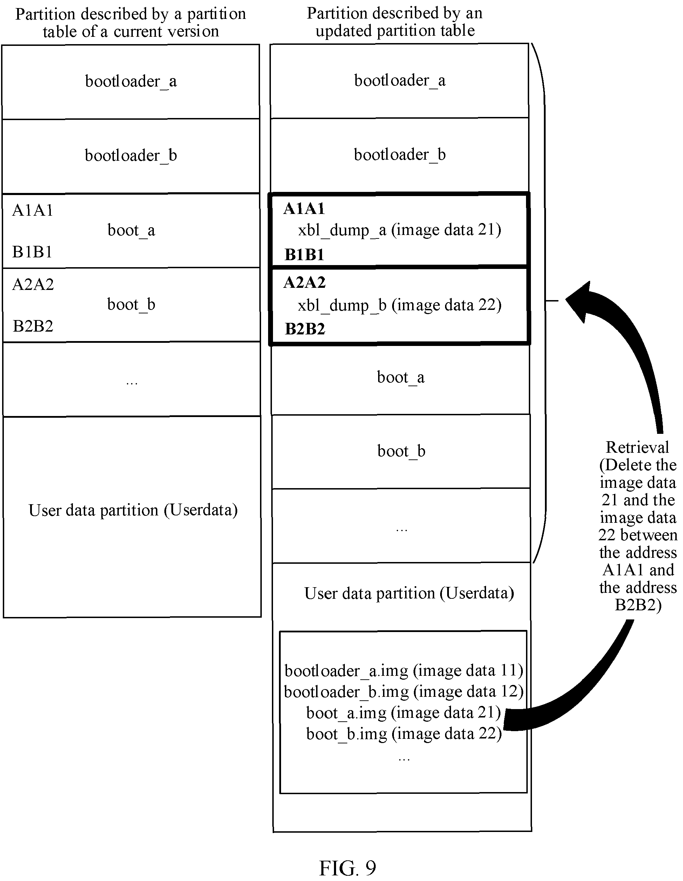

For example, the change_detail.mbn includes add: xbl_dump, indicating that an xbl_dump sub-partition is added. For example, a partition described by the partition table of the current version is shown on the left in FIG. 9, and a partition described by the updated partition table is shown on the right in FIG. 9. It is clear that, in comparison to the partition shown on the left in FIG. 9, two sub-partitions xbl_dump_a and xbl_dump_b are added to the partition shown on the right in FIG. 9.

For the case shown in FIG. 9, in a process of retrieving the system data, the electronic device 130 may query the updated partition table for the newly added partition, namely, the xbl_dump sub-partition indicated in the change_detail.mbn, query two sub-partitions xbl_dump_a and xbl_dump_b, and query start addresses and end addresses of the two sub-partitions. As shown on the right in FIG. 9, an example in which it is found that the start address of the xbl_dump_a sub-partition is A1A1, the end address of the xbl_dump_a sub-partition is B1B1, the start address of the xbl_dump_b sub-partition is A2A2, and the end address of the xbl_dump_b sub-partition is B2B2 is used. The electronic device 130 may clear data that is between the address A1A1 and the address B2B2 and that is in the ROM. For example, as shown on the right in FIG. 9, in the partition described in the partition table of the current version, the address A1A1 to the address B2B2 in the ROM correspond to a storage space of the boot_a sub-partition and a storage space of the boot_b sub-partition, and the image data 21 and the image data 22 are stored respectively. Therefore, through data clearing, the image data 21 and the image data 22 that are between the address A1A1 and the address B2B2 and that are stored in the ROM in the current version may be deleted.

Second, a deletion partition. That is, a second partition is deleted.

In a process of retrieving the system data, for the deletion partition, the electronic device 130 does not need to retrieve system data stored in the deletion partition. This avoids retrieving excess system data.

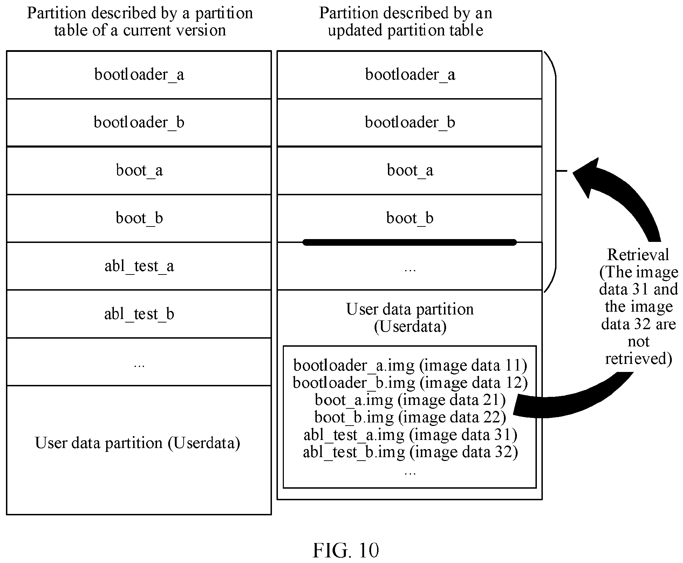

For example, the change_detail.mbn includes delete: delete: abl_test, indicating that the abl_test sub-partition is deleted. For example, a partition described by the partition table of the current version is shown on the left in FIG. 10, and a partition described by the updated partition table is shown on the right in FIG. 10. It is clear that, in comparison to the partition shown on the left in FIG. 10, both the abl_test_a sub-partition and the abl_test_b sub-partition are deleted in the partition shown on the right in FIG. 10.

For the case shown in FIG. 10, in a process of retrieving the system data, the electronic device 130 may query the deletion partition recorded in the change_detail.mbn, namely, the abl_test sub-partition, does not retrieve image data 31 in an abl_test_a_img file in the user data partition (Userdata), and does not retrieve image data 32 in an abl_test_b_img file in the user data partition (Userdata).

It should be noted herein that, the partition can be deleted in the recovery mode only when the system data stored in the partition is deleted without affecting running of the current version at all, and the system data stored in the partition is not retrieved during retrieval. Otherwise, deleting the partition may cause the electronic device 130 to fail to run properly before being upgraded to the target version. Therefore, there are very few cases of deleting partitions. For example, when image data stored in a static sub-partition in the operating system of the current version is redundant, a partition may be deleted through the solution of this application, and the image data stored in the partition is not retrieved. In this way, more storage space can be released.

Third, name modification. That is, a third partition is renamed as a fourth partition.

In a process of retrieving the system data, for a partition on which name modification is performed, the electronic device 130 may query the updated partition table for a sub-partition after name modification and corresponding partition information thereof, such as a partition size, a start address, and an end address. Then, the electronic device 130 may migrate the image data stored in the partition (namely, the third partition) before name modification back to a location between the start address and the end address (which may also be referred to as a third target address range) of the partition (namely, the fourth partition) after name modification in the ROM. In this way, it can be ensured that system data stored in the partition after name modification is the same as system data stored in the partition before name modification.

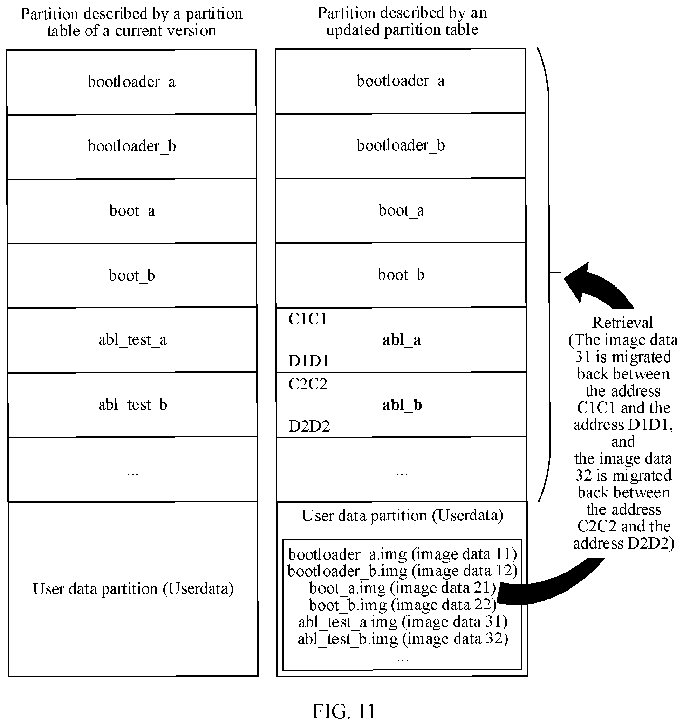

For example, the change_detail.mbn includes change: abl_test, abl, and abl represents a case that a name abl_test of the partition is modified to abl. For example, a partition described by the partition table of the current version is shown on the left in FIG. 11, and a partition described by the updated partition table may be shown on the right in FIG. 11. It is clear that, the abl_test_a sub-partition and the abl_test_b sub-partition shown on the left in FIG. 11 are sequentially modified to the abl_a sub-partition and the abl_b sub-partition shown on the right in FIG. 11.

For the case shown in FIG. 11, in a process of retrieving the system data, the electronic device 130 may query the updated partition table for the sub-partition after name modification, namely, the abl sub-partition recorded in the change_detail.mbn, query two sub-partitions abl_a and abl_b, and query start addresses and end addresses of the two sub-partitions. As shown on the right in FIG. 11, it is found that the start address of the abl_a sub-partition is C1C1, the end address of the abl_a sub-partition is D1D1, the start address of the abl_b sub-partition is C2C2, and the end address of the abl_b sub-partition is D2D2. In addition, a name before modification that is recorded in the change_detail.mbn is abl_test. Then, the electronic device 130 may migrate the image data 31 in the abl_test_a.img file in the user data partition (Userdata) to a location between the address C1C1 and the address D1D1 in the ROM, and migrate the image data 32 in the abl_test_b.img file in the user data partition (Userdata) to a location between the address C2C2 and the address D2D2 in the ROM.

Fourth, a case other than the first case to the third case.

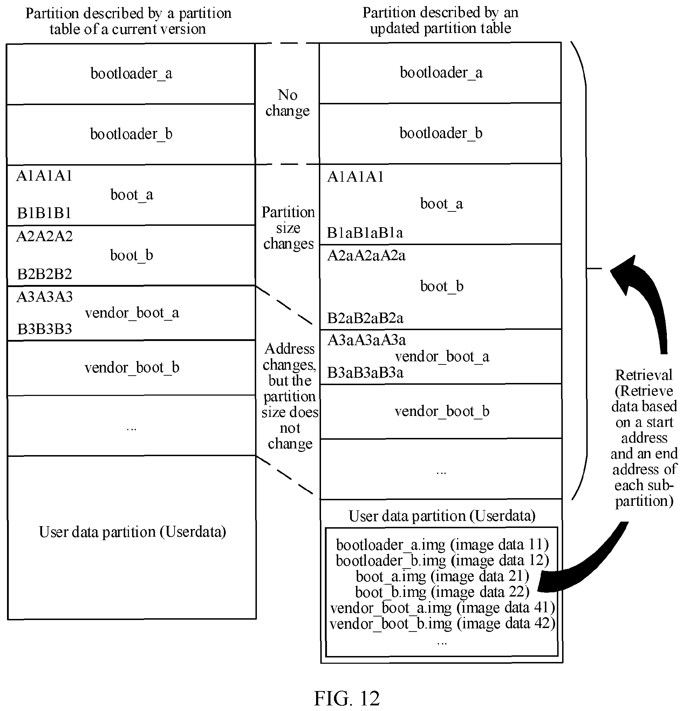

Referring to FIG. 12, a partition described by the partition table of the current version is shown on the left in FIG. 12, and a partition described by the updated partition table may be shown on the right in FIG. 12. The case other than the first case to the third case includes one or more of the three sub cases: no change, a change in a partition size, and a change in an address but no change in the partition size.

No change means that none of a partition size, a start address, an end address, and a name changes. For example, the partition size, the start address, the end address, and the name of the bootloader_a sub-partition shown on the left in FIG. 12 are the same as the partition size, the start address, the end address, and the name shown on the left in FIG. 12. The partition size, the start address, the end address, and the name of the bootloader_b sub-partition shown on the left in FIG. 12 are the same as the partition size, the start address, the end address, and the name shown on the left in FIG. 12.

The change in the partition size further includes two sub cases: expansion of the partition and reduction of the partition. Reduction of the partition means that a storage space corresponding to the partition becomes smaller, and expansion of the partition means that a storage space corresponding to the partition becomes larger. Expansion of the partition is used as an example. A partition size of the boot_a sub-partition shown on the right in FIG. 12 is greater than a partition size of the boot_a sub-partition shown on the left in FIG. 12, and a partition size of the boot_b sub-partition shown on the right in FIG. 12 is greater than a partition size of the boot_b sub-partition shown on the left in FIG. 12.

It should be noted that, to enable the adjusted partition to still store corresponding system data in the current operation, it is ensured that the electronic device 130 can still run normally before being upgraded to a target version. In a case of reduction of the partition, a reduced partition size needs to be sufficient to store system data of a corresponding partition in a current version.

It should be understood that, a change in the partition size is usually also accompanied by a change in the start address and/or the end address. For example, the partition size of the boot_a sub-partition shown on the right in FIG. 12 is greater than the partition size of the boot_a sub-partition shown on the left in FIG. 12. Correspondingly, an end address B1aB1aB1a of the boot_a sub-partition shown on the right in FIG. 12 is later than an end address B1B1B1 of the boot_a sub-partition shown on the left in FIG. 12. For another example, the partition size of the boot_b sub-partition shown on the right in FIG. 12 is greater than the partition size of the boot_b sub-partition shown on the left in FIG. 12. Correspondingly, a start address A2aA2aA2a of the boot_b sub-partition shown on the right in FIG. 12 is later than a start address A2A2A2 of the boot_b sub-partition shown on the left in FIG. 12, and an end address B2aB2aB2a of the boot_b sub-partition shown on the right in FIG. 12 is later than an end address B2B2B2 of the boot_b sub-partition shown on the left in FIG. 12.

That an address changes but a partition size does not change is generally caused by a change in a sum of partition sizes of previous partitions. For example, a previous partition is deleted or a partition size of the previous partition is reduced, resulting in a decrease in the sum of the partition sizes of the previous partitions. For another example, a previous partition is newly added or a partition size of the previous partition is expanded, resulting in an increase in the sum of the partition sizes of the previous partitions. For another example, an arrangement order between the partitions is changed, and the previous partitions are changed, resulting in a change in the sum of the partition sizes of the previous partitions.

An example in which the partition size of the previous partition is expanded is used. Referring to FIG. 12, the partition size of the boot_a sub-partition and the partition size of the boot_b sub-partition are increased. As a result, addresses of subsequent partitions subsequently move backward. For example, a start address of a vendor_boot_a sub-partition moves backward from A3A3A3 to A3aA3aA3a, and an end address of the vendor_boot_a sub-partition moves backward from B3B3B3 to B3aB3aB3a.

For ease of description, a partition with a changed partition size and a changed address but unchanged partition size may be collectively referred to as a fifth partition.

It should be understood that, the first case to the third case are recorded in the change _detail.mbn file of the table adjustment package. However, the fourth case may generally be directly embodied in the partition size, the start address, and/or the end address in the partition table, and does not need to be recorded in the change_detail.mbn file. Based on this, the electronic device 130 may parse the change_detail.mbn file in the table adjustment package. A partition that is not recorded in the change_detail.mbn file is considered as a partition (which may also be referred to as a sixth partition) involved in the fourth case. That is, the sixth partition is a partition other than the first partition, the second partition, and the fourth partition.

Still referring to FIG. 12, in a process of retrieving system data, for any partition (namely, any partition involved in the fourth case) that is not recorded in the change_detail.mbn file, the electronic device 130 may migrate the system data that needs to be stored in the partition to a location between a start address and an end address (which may also be referred to as a first target address range) of the partition recorded in the updated partition table.

For example, the boot_a sub-partition is not recorded in the change_detail.mbn file, and the system data that needs to be stored in the boot_a is the image data 21 in the boot_a.img file in the user data partition (Userdata). In addition, the start address of the boot_a sub-partition in the updated partition table is A1A1A1 and the end address of the boot_a sub-partition in the updated partition is B1B1B1. Then, in the process of retrieving the system data, the electronic device 130 may migrate the image data 21 in the boot_a.img file in the user data partition (Userdata) to the location between the address A1A1A1 to the address B1B1B1 in the ROM.

It should be noted herein that, in S609, the static partition is mainly used as an example for description. During actual implementation, the foregoing four cases may also occur in the basic partition (Common). Details are not described herein again.

In addition, for the dynamic partition (Super), only the dynamic partition (Super) as a whole can be adjusted (for details, refer to Table 1 and related text thereof). In addition, overall adjustment of the dynamic partition (Super) is generally applicable only to a change of an address. For details, refer to the description of the sub case in which the address changes but the partition size does not change in the fourth case. Details are not described herein again.

After the system data is migrated back to the partition (that is, back to the ROM) described by the updated partition table, the migrated system data is no longer useful, but occupies a storage space and wastes storage resources. An example in which the system data is migrated to the user data partition (Userdata) is used. The system data occupies a storage space of the user data partition (Userdata).

Based on this, in some embodiments, referring to FIG. 7, after S609, S705 is further included.

S705: The electronic device 130 deletes the migrated system data. In this way, a storage space can be released.

An example in which the system data is migrated to the user data partition (Userdata) is used. After the migration is completed, the electronic device 130 may format the user data partition (Userdata), to delete the system data in the user data partition (Userdata).

S610: The electronic device 130 restarts.

Because the start order has been changed from starting from the static partition (A) to starting from the static partition (B), the electronic device 130 still starts from the static partition (B), and can continue to run under the system B. This restart may also be referred to as a second restart after the patch package is obtained.

For example, an example in which the operating system is Android is used. The electronic device 130 may control the electronic device 130 to restart by using the following restart instruction:
property_set (ANDROID_RB_PROPERTY, "reboot").

It should be noted that, this restart is a normal restart, and the recovery mode is not entered. Therefore, the electronic device 130 can normally enter a mode of the operating system and run in the operating system, for example, enter an Android mode and run in the Android mode. In addition, because a system data file of the current version has been migrated back to the corresponding partition, the operating system of the current version can still run normally.

S611: The package server 110 produces an upgrade package of a target version.

The package server 110 may produce the upgrade package based on system data of the target version. For example, if a feature is added to the target version in comparison to the current version, the upgrade package obtained by the package server 110 by production should include data used to implement the new feature.

S612: The package server 110 uploads the upgrade package to an OTA server 120.

After producing the patch package, the package server 110 may send the patch package to the OTA server 120, so that the OTA server 120 manages the patch package in a uniform manner.

S613: The electronic device 130 downloads the upgrade package from the OTA server 120.

The OTA server 120 may actively push a download address of the upgrade package to the electronic device 130, for the electronic device 130 to download the upgrade package. Alternatively, the electronic device 130 may send a package search request to the OTA server 120, and the OTA server 120 sends a download address of the upgrade package to the electronic device 130 based on the package search request. For example, the electronic device 130 may read a version number (for example, V1.1) of an intermediate version from a Patch_b sub-partition, and send a package search request carrying the version number (for example, V1.1) of the intermediate version to the OTA server 120. The OTA server 120 compares the V1.1 carried in the package search request with a latest version number (for example, V2.0) in the OTA server 120, and finds that V2.0 is a latest version in comparison to V1.1. In this case, the OTA server 120 may provide a download address of the upgrade package of the operating system of the version V2.0 for the electronic device 130, for the electronic device 130 to download updates.

After obtaining the download address, the electronic device 130 may obtain the upgrade package of the target version (for example, the version V2.0) by downloading.

S614: The electronic device 130 performs virtual (Virtual) A/B upgrading based on the upgrade package.

After obtaining the upgrade package, the electronic device 130 may parse the upgrade package to obtain upgrade data (such as an image file) of each partition, and then write the upgrade data (such as the image file) of each partition into the corresponding partition described in the updated partition table, to upgrade the operating system to the target version.

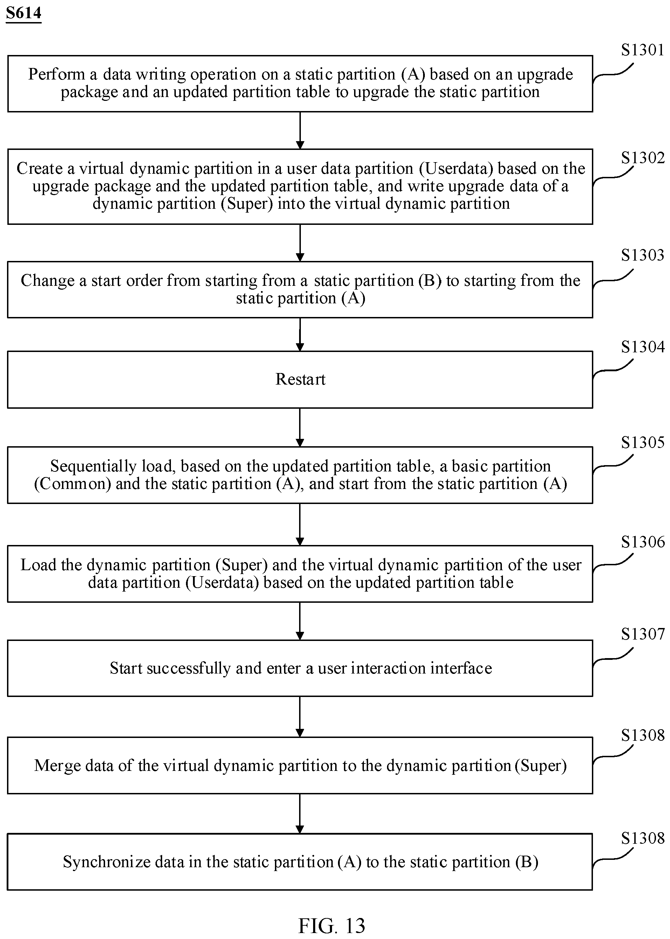

For example, referring to FIG. 13, when the electronic device 130 runs under the system B (for example, performs S610 to implement running under the system B) and performs S614, S614 includes:

S1301: An electronic device 130 performs a data writing operation on a static partition (A) based on an upgrade package and an updated partition table to upgrade the static partition.

For example, the electronic device 130 writes upgrade data (for example, image data) of sub-partitions of the static partition in the upgrade package into corresponding sub-partitions of the static partition (A) described in the updated partition table. For example, if the updated partition table includes a start address 1 and an end address 2 of a boot_a sub-partition, the electronic device 130 may write upgrade data of the boot_a sub-partition in the upgrade package into a location between the start address 1 and the end address 2 in the ROM.

S1302: The electronic device 130 creates a virtual dynamic partition in a user data partition (Userdata) based on the upgrade package and the updated partition table, and writes upgrade data of a dynamic partition (Super) into the virtual dynamic partition.

For example, the electronic device 130 writes upgrade data (for example, image data) of each sub-partition of the dynamic partition (Super) in the upgrade package into the user data partition (Userdata) described in the updated partition table. For example, if the updated partition table includes a start address 3 and an end address 4 of the user data partition (Userdata), the electronic device 130 may write the upgrade data of each sub-partition of the dynamic partition (Super) in the upgrade package into a location between the start address 3 and the end address 4 in the ROM.

Further, in the virtual A/B upgrade solution, an incremental upgrade manner is used for the dynamic partition (Super). In the upgrade process, the virtual dynamic partition of the user data partition (Userdata) stores not all files of the dynamic partition (Super) of the new version after upgrade, but an upgrade result of data that needs to be upgraded in the dynamic partition (Super) of the old version (for example, an intermediate version) after upgrade. That is, the update data of the dynamic partition is stored in the virtual dynamic partition of the user data partition (Userdata). In the virtual A/B upgrade solution, the incremental upgrade of the dynamic partition (Super) is implemented based on a snapshot (snapshot) technology.

A system sub-partition in the dynamic partition (Super) is used as an example. It is assumed that in a version V1.1, data in the system sub-partition may be divided into two parts: a data system 1 and a data system 2. When the version 1.1 is upgraded to the version 2.0, the data system 2 does not change, and the data system 1 is upgraded to a data system 3. Then, in S1302, the electronic device 130 creates the virtual dynamic partition in the user data partition (Userdata) and writes the data system 3 in the virtual dynamic partition.

Further, in the virtual A/B upgrade solution, the incremental upgrade of the dynamic partition (Super) is implemented based on a snapshot (snapshot) technology. Specifically, in the virtual dynamic partition of the user data partition (Userdata), a copy-on-write (Copy-On-Write, cow) file is used to store the upgrade data of the dynamic partition (Super).

Specifically, the upgrade data of the dynamic partition (Super) stored in the user data partition (Userdata) includes a plurality of cow files, each cow file corresponds to a sub-partition of one dynamic partition (Super), and a name of the cow file corresponds to a sub-partition of the dynamic partition (Super) to which the cow file is directed.

In the upgrade package, the cow file of the upgrade data in the dynamic partition (Super) is compressed and saved in a binary code form. In the upgrade package, each cow file is named based on the sub-partition of the dynamic partition (Super) to which the cow file is directed. For example, the cow file for the system sub-partition is named system-cow-img.img.0000.

In S1302, the electronic device 130 unpacks the upgrade package to obtain all cow files, and attaches an A/B partition tag to each cow file. Specifically, when the electronic device 130 currently starts from the static partition (B), it may be understood that the dynamic partition (Super) loaded by the electronic device 130 currently running an operating system is the dynamic partition (B). When the operating system is upgraded, the virtual dynamic partition created in the user data partition (Userdata) is for the dynamic partition (A). Therefore, a name tag_a corresponding to the dynamic partition (A) is attached to the cow file. For example, _a is attached to system_a-cow-img.img.0000 to generate system_a-cow-img.img.0000.

Further, in S1302, after the cow file is written into the user data partition (Userdata), the dynamic partition (Super)+cow file further need to be verified as a whole, and validity of the dynamic partition (Super)+cow file needs to be verified, to verify whether a combination result of the dynamic partition (Super) data+cow file of an intermediate version is data of the dynamic partition (Super) of the target version.

Specifically, an example in which the version V1.1 is upgraded to the version V2.0 is used. A hash value of a combination result of data that does not need to be upgraded (namely, data that does not change from the version V1.1 to the version V2.0) in the dynamic partition (Super) and data that needs to be upgraded (namely, data that needs to be upgraded from the version V1.1 to the version V2.0) in the cow file is calculated, and it is determined whether the hash value is consistent with a hash value of full data in the dynamic partition (Super) in the version V2.0. If yes, it indicates that the cow file is valid. If not, it indicates that the cow file is invalid, the upgrade fails, the upgrade process is interrupted, and an error is reported. In the version V2.0, the hash value of the full data in the dynamic partition (Super) is stored in the upgrade package.

When the cow file is valid, merge status information in a metadata partition (/metadata) of the basic partition (Common) is changed from "merged (merged)" to "wait for merge (wait for merge)". The merge status information indicates whether a cow file that needs to be merged to the dynamic partition (Super) currently exists. Specifically, the merge status information includes an overall identifier for the dynamic partition (Super) and a sub-partition identifier for each sub-partition. When the overall identifier is "merged (merged)", all sub-partitions representing the dynamic partition (Super) do not require a merged operation; when the overall identifier is "wait for merge (wait for merge)", one or more sub-partitions representing the dynamic partition (Super) require a wait for merge operation; when the sub-partition identifier is "merged (merged)", it indicates that the sub-partition does not need to perform a merged operation; and when the sub-partition identifier is "wait for merge (wait for merge)", it indicates that the sub-partition needs to perform a wait for merge operation.

S1303: The electronic device 130 changes a start order from starting from the static partition (B) to starting from the static partition (A).

For example, a start order identifier of an MBR is overwritten, and the start order identifier is overwritten from B to A. After the electronic device 130 is powered on, when the electronic device 130 reads that the start order identifier is A. The electronic device 130 starts from the static partition (A).

S1304: The electronic device 130 restarts. That is, the electronic device 130 exits an operating system of an intermediate version, a power supply of the electronic device 130 is cut off, and then the power supply of the electronic device 130 is turned on again.

It should be noted that, the restart in S1304 is different from the restart (for example, the restart in S606 and S610) in the foregoing stage of adjusting the partition table. The restart in S610 is a restart in response to a restart operation by a user. However, the restart (for example, the restart in S606 and S610) in the stage of adjusting the partition table is a restart implemented through software and does not require the operation by the user.

S1305: The electronic device 130 sequentially loads, based on the updated partition table, the basic partition (Common) and the static partition (A), and starts from the static partition (A).

Because the start order is changed to starting from the static partition (A), the static partition (A) is loaded.

For example, the electronic device 130 may obtain addresses (including a start address and an end address) of sub-partitions in the basic partition (Common) and the static partition (A) from the updated partition table, and then read the system data from a location pointed by the addresses in the ROM, to complete loading of the basic partition (Common) and the static partition (A).

S1306: The electronic device 130 loads the dynamic partition (Super) and the virtual dynamic partition of the user data partition (Userdata) based on the updated partition table.

For example, the electronic device 130 may obtain addresses (including a start address and an end address) of the dynamic partition (Super) from the updated partition table, and then read system data from a location pointed by the addresses in the ROM. After metadata (/supermetadata) at a header of the dynamic partition (Super) is read, offsets of the addresses of the sub-partitions of the dynamic partition (Super) in the dynamic partition (Super) may be obtained. The electronic device 130 may read the system data in the sub-partitions of the dynamic partition (Super) based on the offsets of the addresses of the sub-partitions of the dynamic partition (Super) in the dynamic partition (Super).

In addition, the electronic device 130 reads the merge status information in the metadata (/metadata), determines, based on the merge status information, whether a cow file needs to be retrieved from a specified path of the user data partition (Userdata), and merges and loads the system data and corresponding cow files in the sub-partitions in the dynamic partition (Super) by using snapshot.

Further, in S1306, the electronic device 130 does not load all cow files in the dynamic partition (Super) and the user data partition (Userdata), but loads a corresponding file based on an operating system running requirement. Specifically, in S1306, the electronic device 130 determines, based on the operating system running requirement, a file that needs to be loaded, and extracts, based on the snapshot, a corresponding file from the cow file in the dynamic partition (Super) or a virtual dynamic partition to be loaded.

Specifically, in S1306, when a corresponding cow file exists at the head of the sub-partition of the dynamic partition (Super), a file map of a target version of each sub-partition of the dynamic partition (Super) is first generated based on the snapshot. The electronic device 130 determines, based on the operating system operation requirement, a file that needs to be loaded, and loads the file based on the file map of the target version of the sub-partition of the dynamic partition (Super).

For example, based on the operating system operation requirement, all data in directory user (/system/user) under the system sub-partition is loaded. The electronic device 130 reads the merge status information in the metadata (/metadata), and a sub-partition identifier of the system sub-partition in the merge status information is "wait for merge (wait for merge)". Therefore, the electronic device 130 searches for the cow file in the user data partition (Userdata), and after finding the cow file system_a-cow-img.img.0000, generates, based on the snapshot, the file map of the target version of the system sub-partition based on the file map of the cow file in system_a-cow-img.img.0000. The data is loaded based on the storage address of all files under /system/user in the file map of the target version of the system sub-partition.

Further, in S1306, before the file is loaded, the electronic device 130 further needs to verify the loaded file. Unlike S1302, in S1306, the dynamic partition (Super)+cow file are not verified as a whole, but only the file that needs to be loaded is verified. For example, verification is performed based on dmverity (dm-verity is a target (target) of dm (device mapper), is a virtual block electronic device 130, and is specifically used for verification of a file system). If the verification succeeds, the file is loaded. If the verification fails, the electronic device 130 restarts. The system is rolled back or the file is loaded again.

S1307: The electronic device 130 starts successfully and enters a user interaction interface.

S1308: The electronic device 130 merges the data of the virtual dynamic partition to the dynamic partition (Super).

In the description of the specification of this application, a merge operation means that in an operating system upgrade process, a dynamic partition (Super) upgrade file (cow file) stored in a virtual dynamic partition on a user data partition (Userdata) is written into the dynamic partition (Super), so that a file of the dynamic partition (Super) completes data upgrade. In this way, the electronic device 130 does not need to load the dynamic partition (Super) and the virtual dynamic partition when starting next time, and start of the electronic device 130 can be completed only by loading the dynamic partition (Super).

Specifically, the electronic device 130 performs power-on broadcast after starting successfully, and starts an upgrade process after power-on broadcast. The upgrade procedure reads the merge status information in the metadata (/metadata) of the basic partition (Common). If the merge status information is "merged (merged)", the electronic device 130 enters a normal operation mode.

If the merge status information is "wait for merge (wait for merge)", the upgrade procedure merges the cow file in the user data partition (Userdata) to the dynamic partition (Super).

Specifically, the upgrade procedure writes upgrade data in the cow file in the user data partition (Userdata) into a corresponding address in the dynamic partition (Super), so that all data in the dynamic partition (Super) is data of an upgraded new version.

After this, the upgrade procedure deletes the cow file in the user data partition (Userdata), and returns the storage space to the user data partition (Userdata). In addition, the merge status information in the metadata (/metadata) of the basic partition (Common) is changed from "wait for merge (wait for merge)" to "merged (merged)".

S1309: The electronic device 130 synchronizes data in the static partition (A) to the static partition (B).

In some embodiments, after merge is completed, the electronic device 130 may further synchronize the data stored in the sub-partitions in the static partition (A) to the corresponding sub-partition in the static partition (B), so that the static partition (B) also stores the data of the target version. Then, when starting from the static partition (B) thereafter, the electronic device 130 may also run a latest operating system, namely, an operating system of a target version.

In S1301, a data operation of a static partition upgrade is for the static partition (A), which does not affect operating system data of a currently started static partition (B). In addition, in S1302, a data operation of a dynamic partition upgrade is completed on a virtual dynamic partition created in the user data partition (Userdata), which does not affect the currently mounted dynamic partition (Super). Therefore, in a process of upgrading the entire operating system, the user may normally use the electronic device 130. In addition, after S1303 is completed, the electronic device 130 does not need to restart immediately, and the user may select a restart occasion. In this way, an upgrading process of the operating system does not affect a normal mobile phone operation of the user, thereby greatly improving user experience. Further, for the dynamic partition (Super), a virtual dynamic partition is created in the user data partition (Userdata) only when upgrade needs to be performed. Therefore, data storage space utilization is effectively improved.

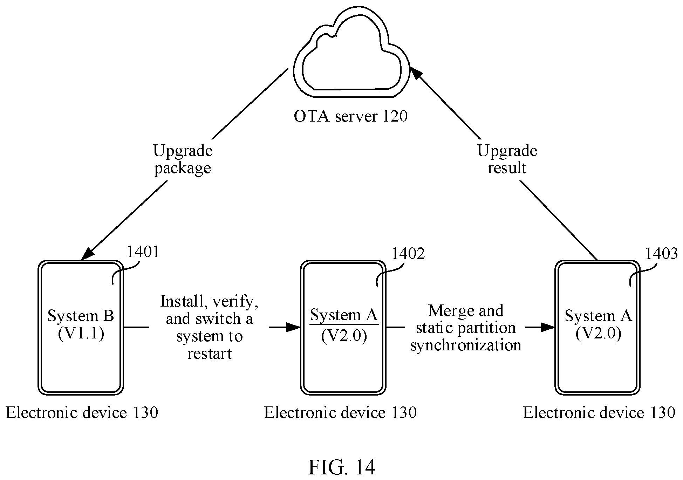

To facilitate understanding of the foregoing virtual A/B upgrade solution, the following further simplifies the description of the virtual A/B upgrade solution with reference to an example in FIG. 14. As shown in FIG. 14, when the system B of the version V1.1 runs (as shown in a state 1401 in FIG. 14), the electronic device 130 obtains the upgrade package of the version V2.0 from the OTA server 120 (refer to the foregoing descriptions in S613). After obtaining the upgrade package, the electronic device 130 may perform steps of "installation" and "verification" (refer to the foregoing descriptions in S1301 and S1302). In addition, the electronic device 130 may "switch a system to restart" (refer to the foregoing descriptions in S1303 and S1304), so that the electronic device 130 may start from the static partition (A), to implement operation of the system A in the version V2.0 (as shown in a state 1402 in FIG. 14). It should be noted that, in this case, because merge is not completed, the system A of the V2.0 version shown in a state 1402 in FIG. 14 needs to be implemented by simultaneously loading the virtual dynamic partition and the dynamic partition (Super). Then, the electronic device 130 may perform a step of "merge" (refer to the foregoing descriptions in S1308), so that the cow file is merged to the dynamic partition (Super). In addition, the electronic device 130 may further perform "static partition synchronization", so that the electronic device 130 can run the operating system of the target version when starting from the static partition (A) or the static partition (B). Then, the electronic device 130 may run the system A of the version V2.0 (as shown in a state 1403 in FIG. 14) without simultaneously loading the virtual dynamic partition and the dynamic partition (Super). After completing the foregoing virtual A/B upgrade, the electronic device 130 may further feed back an upgrade result to the OTA server 120, so that the OAT server 120 determines a version of an operating system currently running in the electronic device 130, to facilitating management of the operating system of the electronic device 130.

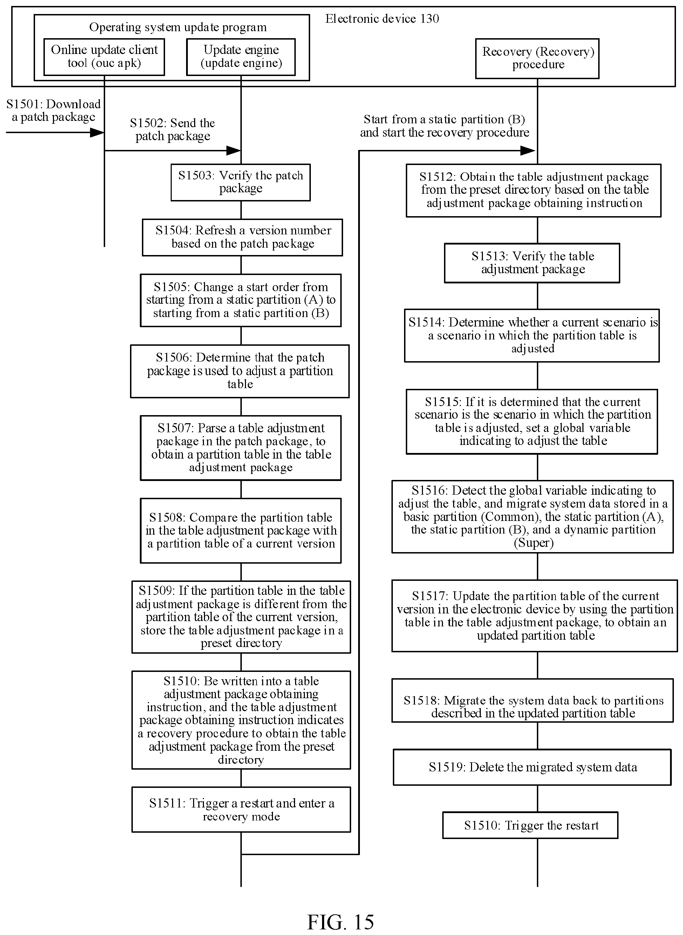

In the foregoing embodiments in FIG. 6 and FIG. 7, the electronic device 130 is mainly used as a main body, and a specific process of adjusting the partition table (such as the foregoing steps of adjusting the partition table corresponding to S603 to S610) is described. Further, referring to FIG. 15, an ouc apk (namely, an online update client tool), an update engine (namely, an upgrade engine), and a recovery procedure (namely, a recovery procedure) in the electronic device 130 are used as execution entities, and an example in which the electronic device 130 currently starts from the static partition (A) is still used. A specific process of adjusting the partition table includes the following steps.

S1501: The ouc apk downloads an upgrade package. Reference may be made to the foregoing descriptions in S603.

S1502: The ouc apk sends a patch package to the update engine.

S1503: The update engine verifies the patch package. Reference may be made to the foregoing descriptions in S701.

S1504: The update engine refreshes a version number based on the patch package. Reference may be made to the foregoing descriptions in S604.

S1505: The update engine changes a start order from starting from a static partition (A) to starting from a static partition (B). Reference may be made to the foregoing descriptions in S605.

S1506: The update engine determines that the patch package is used to adjust the partition table. Reference may be made to the foregoing descriptions in S702a.

S1507: The update engine parses a table adjustment package in the patch package, to obtain a partition table in the table adjustment package.

S1508: The update engine compares the partition table in the table adjustment package with a partition table of a current version. Reference may be made to the foregoing descriptions in S702a.

S1509: If the partition table in the table adjustment package is different from the partition table of the current version, the update engine stores the table adjustment package in a preset directory.

The preset directory is a directory that a recovery procedure can access. For example, the preset directory is a directory, such as/cache/recovery under a cache sub-partition in a basic partition (common). Then, the table adjustment package is decompressed and stored in the preset directory, so that after a recovery mode is entered, the recovery procedure obtains the table adjustment package, and performs corresponding processing of adjusting the partition table.

S1510: The update engine is written into a table adjustment package obtaining instruction, and the table adjustment package obtaining instruction indicates a recovery procedure to obtain the table adjustment package from the preset directory.

The table adjustment package obtaining instruction (which may also be referred to as a preset instruction) includes the preset directory and a name (namely, a preset name) of the table adjustment package. For example, a format of the table adjustment package obtaining instruction is: update package (update package)=name of the preset directory/table adjustment package.

If the preset directory is/cache/recovery, and a name of the table adjustment package is update_base_table_change.zip, the table adjustment package obtaining instruction may be update package =/cache/recovery/update_base_table_change.zip. This indicates that a table adjustment package with the name update_base_table_change.zip is read from the/cache/recovery directory.

In a specific implementation, the table adjustment package obtaining instruction may be written into an instruction file under the preset directory. For example, the table adjustment package obtaining instruction is stored in/cache/recovery/command. In this way, it is convenient to be accessed by the recovery procedure.

S1511: The update engine triggers a restart and enters a recovery mode. Reference may be made to the foregoing descriptions in S606.

S1512: The recovery procedure obtains the table adjustment package from the preset directory based on the table adjustment package obtaining instruction.

For example, after the recovery procedure is started, the recovery procedure may read a command file from the preset directory, to read the table adjustment package obtaining instruction.

The recovery procedure may obtain the table adjustment package indicated by the table adjustment package obtaining instruction from the preset directory indicated by the table adjustment package obtaining instruction.

S1513: The recovery procedure verifies the table adjustment package. Reference may be made to the foregoing descriptions in S606.

It should be noted that, although the table adjustment package is used for description in both S1512 and S1513, in practice, the recovery procedure may further read an obtaining instruction of another update package (for example, a standard modification package), causing another update package instead of the table adjustment package to be obtained. Therefore, the recovery procedure further needs to perform S1514 below, to determine whether the scenario is a scenario in which the partition table is adjusted.

S1514: The recovery procedure determines whether a current scenario is a scenario in which the partition table is adjusted. Reference may be made to the foregoing descriptions in S704.

For example, if a name (namely, a preset name) of the table adjustment package is read from the table adjustment package obtaining instruction in S1512, it may be determined that the current scenario is the scenario in which the partition table is adjusted.

S1515: If it is determined that the current scenario is the scenario in which the partition table is adjusted, the recovery procedure sets a preset global variable indicating to adjust the partition table.

The recovery procedure can explicitly indicate that the current scenario is the scenario in which the partition table is adjusted by setting the preset global variable, such as ptable-change, indicating to adjust the partition table. Subsequently, in a code running process, an operation of a corresponding scenario in which the partition table is adjusted may be performed based on the preset global variable, and scenario determining does not need to be performed each time before performing the operation.

S1516: The recovery procedure detects a global variable indicating to adjust a table, and migrates system data in a basic partition (Common), a static partition (A), a static partition (B), and a dynamic partition (Super). Reference may be made to the foregoing descriptions in S607.

For example, the recovery procedure migrates the system data in the basic partition (Common), the static partition (A), the static partition (B), and the dynamic partition (Super) to a tail of the user data partition (Userdata).

S1517: The recovery procedure updates a partition table of a current version in the electronic device 130 by using the partition table in the table adjustment package, to obtain an updated partition table. Reference may be made to the foregoing descriptions in S608.

S1518: The recovery procedure returns the system data to partitions described in the updated partition table. Reference may be made to the foregoing descriptions in S609.

S1519: The recovery procedure deletes the migrated system data. Reference may be made to the foregoing descriptions in S705.

S1520: The recovery procedure triggers a restart.

It should be understood that, this restart is a normal restart. After this restart, an operating system mode, such as an Android mode, and the recovery mode is not entered.

Finally, it should be noted herein that, the foregoing mainly uses a virtual A/B data storage structure as an example, which describes a specific implementation of adjusting the partition table based on the patch package. Certainly, in some other embodiments, a non-virtual A/B data storage structure memory (such as a ROM) may also use the solution of adjusting the partition table based on the patch package provided in embodiments of this application, to adjust partition deployment. This is not specifically limited in embodiments of this application.

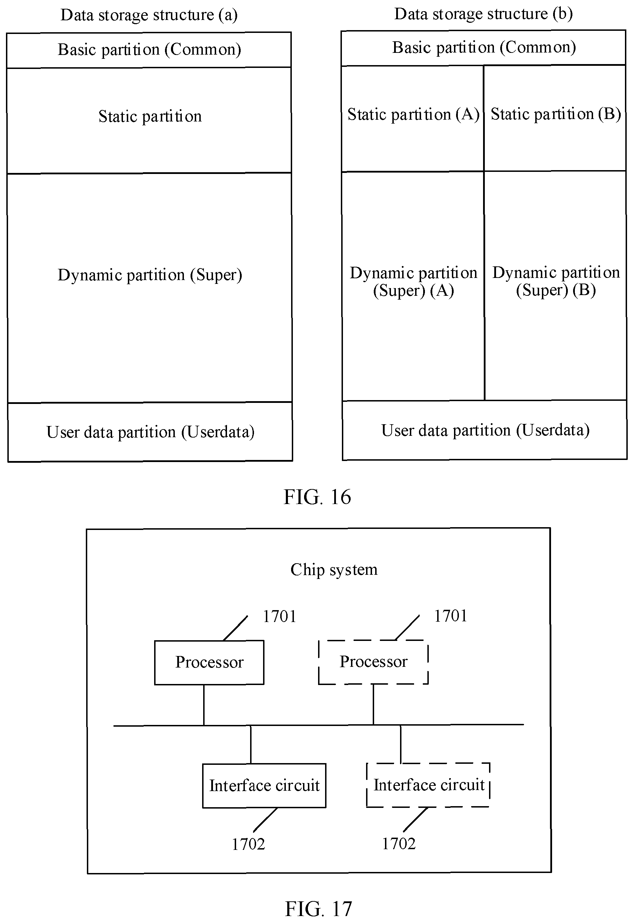

For example, refer to FIG. 16, a data storage structure (a) may be applied. In the data storage structure (a), there is only one set of static partition and dynamic partition (Super), and the electronic device 130 can only run in an operating system formed by data in the basic partition, the static partition, and the dynamic partition (Super). In this example, a partition table of a current version is recorded in the electronic device 130, and is used to describe one type of partition deployment of the basic partition, the static partition, and the dynamic partition (Super). The electronic device 130 may obtain a patch package used to adjust the partition table. The patch package includes the partition table, and is used to describe another type of partition deployment of the basic partition, the static partition, and the dynamic partition (Super). Then, the electronic device 130 restarts and enters a recovery mode. In the recovery mode, data of the basic partition, the static partition, and the dynamic partition (Super) is migrated, for example, migrated to a user data partition (Userdata). Partition deployment of the memory is updated from the partition deployment described by a partition table of a current version to the partition deployment described by the partition table in the patch package. Finally, the migrated data is migrated back to the partitions corresponding to the partition deployment described by the partition table in the patch package. Therefore, partition table adjustment for the data storage structure (a) is implemented.

For another example, still refer to FIG. 16, a data storage structure (b) may be further applied. In the data storage structure (b), there are two sets of static partitions and dynamic partitions (Super). The electronic device 130 may run on an operating system (such as an operating system (A)) formed by data in the basic partition, the static partition (A), and the dynamic partition (Super) (A) (which may also be referred to as a first dynamic partition), or may run on an operating system (such as an operating system (B)) formed by data in the basic partition, the static partition (B), and the dynamic partition (Super) (B) (which may also be referred to as a second dynamic partition). In this example, a partition table of a current version is recorded in the electronic device 130, and is used to describe one type of partition deployment of the basic partition, the static partition (A), the static partition (B), the dynamic partition (Super) (A), and the dynamic partition (Super) (B). The electronic device 130 may obtain a patch package used to adjust the partition table. The patch package includes the partition table, and is used to describe another type of partition deployment of the basic partition, the static partition (A), the static partition (B), the dynamic partition (Super) (A), and the dynamic partition (Super) (B). Then, the electronic device 130 restarts and enters a recovery mode. In the recovery mode, data of the basic partition, the static partition (A), the static partition (B), the dynamic partition (Super) (A), and the dynamic partition (Super) (B) is migrated, for example, migrated to a user data partition (Userdata). Partition deployment of the memory is updated from the partition deployment described by a partition table of a current version to the partition deployment described by the partition table in the patch package. Finally, the migrated data is migrated back to the partitions corresponding to the partition deployment described by the partition table in the patch package. Therefore, partition table adjustment for the data storage structure (b) is implemented.

Embodiments of this application further provide an electronic device. The electronic device may include: a memory and one or more processors. The memory is coupled to the processor. The memory is configured to store computer program code, and the computer program code includes computer instructions. When the processor executes the computer instructions, the electronic device can execute various steps in the foregoing embodiments. Certainly, the electronic device includes but is not limited to the memory and one or more processors.

Embodiments of this application further provide a chip system, and the chip system may be applied to the electronic device in the foregoing embodiments. As shown in FIG. 17, the chip system includes at least one processor 1701 and at least one interface circuit 1702. The processor 1701 may be the processor in the foregoing electronic device. The processor 1701 and the interface circuit 1702 can be connected to each other through a line. The processor 1701 may receive and execute computer instructions from the memory of the electronic device through the interface circuit 1702. The computer instructions, when executed by the processor 1701, may enable the electronic device to perform the steps in the foregoing embodiments. Certainly, the chip system may further include other discrete devices, which are not specifically limited in embodiments of this application.

In some embodiments, the foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units of embodiments in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for upgrading an operating system, applied to an electronic device (130), wherein the electronic device (130) comprises a memory (321), the memory (321) comprises a basic partition, a first static partition, a second static partition, and a dynamic partition, the electronic device (130) comprises a first partition table, the first partition table is used to describe one type of partition deployment of the basic partition, the first static partition, the second static partition, and the dynamic partition, and the method comprises:
obtaining (S603), by the electronic device (130), a patch package, wherein the patch package comprises a second partition table, and the second partition table is used to describe another type of partition deployment of the basic partition, the first static partition, the second static partition, and the dynamic partition;
restarting (S606), by the electronic device (130), for the first time after obtaining the patch package, and entering a recovery mode;
migrating (S607), by the electronic device (130) in the recovery mode, data in the basic partition, the first static partition, the second static partition, and the dynamic partition, updating (S608) partition deployment of the memory (321) from the partition deployment described by the first partition table to the partition deployment described by the second partition table, and migrating (S609) the migrated data back to corresponding partitions in the partition deployment described by the second partition table;
restarting (S610), by the electronic device (130), for the second time; and
obtaining (S613), by the electronic device (130), an upgrade package of an operating system of the electronic device (130), and writing upgrade data in the upgrade package into the corresponding partitions in the partition deployment described in the second partition table, to complete upgrading of the operating system.

2. The method according to claim 1, wherein the first partition table comprises partition information of a plurality of sub-partitions in the basic partition, the first static partition, and the second static partition in an operating system of a first version, and partition information of the dynamic partition; and the second partition table comprises partition information of a plurality of sub-partitions in the basic partition, the first static partition, and the second static partition in an operating system of a second version, and the partition information of the dynamic partition, wherein
the partition information comprises a partition size, a partition name, a start address, and an end address.

3. The method according to claim 2, wherein the restarting, by the electronic device (130), for the first time and entering a recovery mode comprises:
restarting, by the electronic device (130), for the first time and entering the recovery mode if the first partition table is different from the second partition table, wherein that the first partition table is different from the second partition table comprises at least one of the following:
the second partition table comprises partition information of a first partition, and the first partition table does not comprise the partition information of the first partition;
the first partition table comprises partition information of a second partition, and the second partition table does not comprise the partition information of the second partition;
the first partition table comprises partition information of a third partition, the second partition table comprises partition information of a fourth partition, a partition name of the third partition is different from a partition name of the fourth partition, but the third partition and the fourth partition are used to store same data; and
both the first partition table and the second partition table comprise partition information of a fifth partition, but first partition information of the fifth partition in the first partition table is different from first partition information of the fifth partition in the second partition table, and the first partition information does not comprise the partition name, wherein
the first partition, the second partition, the third partition, the fourth partition, and the fifth partition are sub-partitions in the basic partition, the first static partition, and the second static partition, or the first partition, the second partition, the third partition, the fourth partition, and the fifth partition are the dynamic partitions.

4. The method according to claim 3, wherein the migrating the migrated data back to corresponding partitions in the partition deployment described by the second partition table comprises:
migrating, by the electronic device (130), data migrated from a sixth partition back to a first target address range in the memory (321), wherein
the sixth partition is a partition in the second partition table other than the first partition, the second partition, and the fourth partition, the sixth partition is one sub-partition in the basic partition, the first static partition, and the second static partition, or the sixth partition is the dynamic partition, and the first target address range is a range between a start address and an end address of the sixth partition in the second partition table.

5. The method according to claim 3 or 4, wherein the patch package comprises first indication information, and the first indication information indicates that the first partition is newly added to the second partition table in comparison to the first partition table; and the migrating the migrated data back to corresponding partitions in the partition deployment described by the second partition table comprises:
reading, by the electronic device (130), the first indication information, and querying the second partition table for the start address and the end address of the first partition based on the first indication information; and
clearing, by the electronic device (130), data in a second target address range in the memory (321), wherein
the second target address range is a range between a start address and an end address of the first partition in the second partition table.

6. The method according to any one of claims 3 to 5, wherein the migrating the migrated data back to corresponding partitions in the partition deployment described by the second partition table comprises:
skipping retrieving, by the electronic device (130), data migrated from the second partition; and
the patch package comprises second indication information, and the second indication information indicates that the second partition is deleted in the second partition table in comparison to the first partition table; and
the method further comprises:
reading, by the electronic device (130), the second indication information, and determining, based on the second indication information, the data migrated from the second partition.

7. The method according to any one of claims 3 to 6, wherein the migrating the migrated data back to corresponding partitions in the partition deployment described by the second partition table comprises:
migrating, by the electronic device (130), data migrated from the third partition back to a third target address range in the memory (321), wherein
the third target address range is a range between a start address and an end address of the fourth partition in the second partition table.

8. The method according to claim 7, wherein the patch package comprises third indication information, and the third indication information indicates that the third partition in the first partition table is updated to the fourth partition in the second partition table; and
before the migrating, by the electronic device (130), data migrated from the third partition back to a third target address range in the memory (321), the method comprises:
reading, by the electronic device (130), the third indication information, and querying the second partition table for the start address and the end address of the fourth partition based on the third indication information.

9. The method according to any one of claims 1 to 8, wherein the restarting, by the electronic device (130), for the first time after obtaining the patch package comprises:
restarting, by the electronic device (130), for the first time after obtaining the patch package, if the patch package comprises a data packet with a preset name, or the patch package comprises a first tag, wherein
the data packet with the preset name is used to adjust partition deployment, and the first tag indicates to adjust the partition deployment.

10. The method according to any one of claims 1 to 9, wherein the migrating data in the basic partition, the first static partition, the second static partition, and the dynamic partition comprises:
migrating the data in the basic partition, the first static partition, the second static partition, and the dynamic partition if the patch package comprises the data packet with the preset name, wherein
the data packet with the preset name is used to adjust the partition deployment;
when the patch package comprises the data packet with the preset name, storing, by the electronic device (130), the data packet with the preset name in a preset directory of the electronic device (130), and writing a preset instruction into the electronic device (130), wherein the preset instruction comprises the preset name; and
after the restarting, by the electronic device (130), for the first time after obtaining the patch package, the method further comprises:
reading, by the electronic device (130), the preset instruction; and
the migrating the data in the basic partition, the first static partition, the second static partition, and the dynamic partition if the patch package comprises the data packet with the preset name comprises:
migrating, by the electronic device (130), the data in the basic partition, the first static partition, the second static partition, and the dynamic partition if the preset instruction comprises the preset name.

11. The method according to claim 10, wherein the preset instruction comprises a preset directory, and the second partition table is stored in the data packet with the preset name; and the migrating the data in the basic partition, the first static partition, the second static partition, and the dynamic partition if the patch package comprises the data packet with the preset name comprises:
setting, by the electronic device (130), a preset global variable indicating to adjust the partition deployment if the patch package comprises the data packet with the preset name;
detecting, by the electronic device (130), the preset global variable, and migrating the data in the basic partition, the first static partition, the second static partition, and the dynamic partition; and
before the updating partition deployment of the memory (321) from the partition deployment described by the first partition table to the partition deployment described by the second partition table, the method further comprises:
obtaining, by the electronic device (130) based on the preset instruction from the preset directory, the data packet with the preset name, and obtaining the second partition table from the data packet with the preset name.

12. The method according to any one of claims 1 to 11, wherein the memory (321) further comprises a user data partition, and the migrating data in the basic partition, the first static partition, the second static partition, and the dynamic partition comprises:
migrating, by the electronic device (130), the data in the basic partition, the first static partition, the second static partition, and the dynamic partition to the user data partition; and
the migrating the migrated data back to corresponding partitions in the partition deployment described by the second partition table comprises:
migrating the data in the basic partition, the first static partition, the second static partition, and the dynamic partition in the user data partition back to the corresponding partitions in the partition deployment described by the second partition table.

13. The method according to any one of claims 2 to 12, wherein the patch package comprises a first version number; and
the obtaining, by the electronic device (13o), a patch package comprises:
obtaining, by the electronic device (130), the patch package when the electronic device (130) loads the basic partition, the first static partition, and the dynamic partition and runs the electronic device (130);
after the obtaining, by the electronic device (130), a patch package, the method further comprises:
refreshing, by the electronic device (130), a version number in the second static partition to the first version number; and
setting, by the electronic device (130), a start order of the electronic device (130) to starting from the second static partition;
after the restarting, by the electronic device (130), for the second time, the method further comprises:
loading, by the electronic device (130), the basic partition, the second static partition, and the dynamic partition to run the electronic device (130);
reading, by the electronic device (130), the first version number from the second static partition; and
the obtaining, by the electronic device (130), an upgrade package of an operating system of the electronic device (130) comprises:
obtaining, by the electronic device (130), the upgrade package of the operating system of the electronic device (130) based on the first version number.

14. An electronic device (130), wherein the electronic device (130) comprises a processor (310, 1701) and a memory (321), the memory (321) comprises a basic partition, a first static partition, a second static partition, a dynamic partition, and a user data partition, the electronic device (130) further comprises a first partition table, the first partition table is used to describe one type of partition deployment of the basic partition, the first static partition, the second static partition, and the dynamic partition, and the processor (310, 1701) is configured to execute software code stored in the memory (321), to enable the electronic device (130) to perform the method according to any one of claims 1 to 13.

15. A computer-readable storage medium, storing a computer program, wherein when the computer program is run on an electronic device (130), the computer program enables the electronic device (130) to perform the method according to any one of claims 1 to 13.

## Patentansprüche

1. Verfahren zum Aktualisieren eines Betriebssystems, das auf eine elektronische Vorrichtung (130) angewendet wird, wobei die elektronische Vorrichtung (130) einen Speicher (321) umfasst, der Speicher (321) eine Basispartition, eine erste statische Partition, eine zweite statische Partition und eine dynamische Partition umfasst, die elektronische Vorrichtung (130) eine erste Partitionstabelle umfasst, die erste Partitionstabelle verwendet wird, um eine Art der Partitionsbereitstellung der Basispartition, der ersten statischen Partition, der zweiten statischen Partition und der dynamischen Partition zu beschreiben, und das Verfahren umfasst:
Erhalten (S603), durch die elektronische Vorrichtung (130), eines Patch-Pakets, wobei das Patch-Paket eine zweite Partitionstabelle umfasst und die zweite Partitionstabelle verwendet wird, um eine andere Art der Partitionsbereitstellung der Basispartition, der ersten statischen Partition, der zweiten statischen Partition und der dynamischen Partition zu beschreiben;
Neustarten (S606), durch die elektronische Vorrichtung (130), zum ersten Mal nach dem Erhalten des Patch-Pakets und Eintreten in einen Wiederherstellungsmodus;
Migrieren (S607), durch die elektronische Vorrichtung (130) im Wiederherstellungsmodus, von Daten in der Basispartition, der ersten statischen Partition, der zweiten statischen Partition und der dynamischen Partition, Aktualisieren (S608) der Partitionsbereitstellung des Speichers (321) von der durch die erste Partitionstabelle beschriebenen Partitionsbereitstellung auf die durch die zweite Partitionstabelle beschriebene Partitionsbereitstellung und Remigrieren (S609) der migrierten Daten in entsprechende Partitionen in der durch die zweite Partitionstabelle beschriebenen Partitionsbereitstellung;
Neustarten (S610), durch die elektronische Vorrichtung (130), zum zweiten Mal; und
Erhalten (S613), durch die elektronische Vorrichtung (130), eines Aktualisierungspakets eines Betriebssystems der elektronischen Vorrichtung (130) und Schreiben von Aktualisierungsdaten in dem Aktualisierungspaket in die entsprechenden Partitionen in der in der zweiten Partitionstabelle beschriebenen Partitionsbereitstellung, um die Aktualisierung des Betriebssystems abzuschließen.

2. Verfahren nach Anspruch 1, wobei die erste Partitionstabelle Partitionsinformationen einer Vielzahl von Unterpartitionen in der Basispartition, der ersten statischen Partition und der zweiten statischen Partition in einem Betriebssystem einer ersten Version und Partitionsinformationen der dynamischen Partition umfasst; und die zweite Partitionstabelle Partitionsinformationen einer Vielzahl von Unterpartitionen in der Basispartition, der ersten statischen Partition und der zweiten statischen Partition in einem Betriebssystem einer zweiten Version und die Partitionsinformationen der dynamischen Partition umfasst, wobei
die Partitionsinformationen eine Partitionsgröße, einen Partitionsnamen, eine Startadresse und eine Endadresse umfassen.

3. Verfahren nach Anspruch 2, wobei das Neustarten, durch die elektronische Vorrichtung (130), zum ersten Mal und Eintreten in einen Wiederherstellungsmodus umfasst:
Neustarten, durch die elektronische Vorrichtung (130), zum ersten Mal und Eintreten in den Wiederherstellungsmodus, falls sich die erste Partitionstabelle von der zweiten Partitionstabelle unterscheidet, wobei, dass sich die erste Partitionstabelle von der zweiten Partitionstabelle unterscheidet, mindestens eines der Folgenden umfasst:
die zweite Partitionstabelle umfasst Partitionsinformationen einer ersten Partition, und die erste Partitionstabelle umfasst die Partitionsinformationen der ersten Partition nicht;
die erste Partitionstabelle umfasst Partitionsinformationen einer zweiten Partition, und die zweite Partitionstabelle umfasst die Partitionsinformationen der zweiten Partition nicht;
die erste Partitionstabelle umfasst Partitionsinformationen einer dritten Partition, die zweite Partitionstabelle umfasst Partitionsinformationen einer vierten Partition, ein Partitionsname der dritten Partition unterscheidet sich von einem Partitionsnamen der vierten Partition, aber die dritte Partition und die vierte Partition werden verwendet, um dieselben Daten zu speichern; und
sowohl die erste Partitionstabelle als auch die zweite Partitionstabelle umfassen Partitionsinformationen einer fünften Partition, aber erste Partitionsinformationen der fünften Partition in der ersten Partitionstabelle unterscheiden sich von ersten Partitionsinformationen der fünften Partition in der zweiten Partitionstabelle, und die ersten Partitionsinformationen umfassen den Partitionsnamen nicht, wobei
die erste Partition, die zweite Partition, die dritte Partition, die vierte Partition und die fünfte Partition Unterpartitionen in der Basispartition, der ersten statischen Partition und der zweiten statischen Partition sind, oder die erste Partition, die zweite Partition, die dritte Partition, die vierte Partition und die fünfte Partition die dynamischen Partitionen sind.

4. Verfahren nach Anspruch 3, wobei das Remigrieren der migrierten Daten in entsprechende Partitionen in der durch die zweite Partitionstabelle beschriebenen Partitionsbereitstellung umfasst:
Remigrieren, durch die elektronische Vorrichtung (130), von aus einer sechsten Partition migrierten Daten in einen ersten Zieladressbereich im Speicher (321), wobei
die sechste Partition eine von der ersten Partition, der zweiten Partition und der vierten Partition verschiedene Partition in der zweiten Partitionstabelle ist, die sechste Partition eine Unterpartition in der Basispartition, der ersten statischen Partition und der zweiten statischen Partition ist oder die sechste Partition die dynamische Partition ist, und der erste Zieladressbereich ein Bereich zwischen einer Startadresse und einer Endadresse der sechsten Partition in der zweiten Partitionstabelle ist.

5. Verfahren nach Anspruch 3 oder 4, wobei das Patch-Paket erste Angabeinformationen umfasst und die ersten Angabeinformationen angeben, dass die erste Partition im Vergleich zu der ersten Partitionstabelle neu zu der zweiten Partitionstabelle hinzugefügt wurde; und das Remigrieren der migrierten Daten in entsprechende Partitionen in der durch die zweite Partitionstabelle beschriebenen Partitionsbereitstellung umfasst:
Lesen, durch die elektronische Vorrichtung (130), der ersten Angabeinformationen und Abfragen der zweiten Partitionstabelle nach der Startadresse und der Endadresse der ersten Partition basierend auf den ersten Angabeinformationen; und
Löschen, durch die elektronische Vorrichtung (130), von Daten in einem zweiten Zieladressbereich im Speicher (321), wobei
der zweite Zieladressbereich ein Bereich zwischen einer Startadresse und einer Endadresse der ersten Partition in der zweiten Partitionstabelle ist.

6. Verfahren nach einem der Ansprüche 3 bis 5, wobei das Remigrieren der migrierten Daten in entsprechende Partitionen in der durch die zweite Partitionstabelle beschriebenen Partitionsbereitstellung umfasst:
Absehen von einem Zurückholen, durch die elektronische Vorrichtung (130), von aus der zweiten Partition migrierten Daten; und
das Patch-Paket zweite Angabeinformationen umfasst und die zweiten Angabeinformationen angeben, dass die zweite Partition in der zweiten Partitionstabelle im Vergleich zu der ersten Partitionstabelle gelöscht wurde; und
das Verfahren ferner umfasst:
Lesen, durch die elektronische Vorrichtung (130), der zweiten Angabeinformationen und Bestimmen, basierend auf den zweiten Angabeinformationen, der aus der zweiten Partition migrierten Daten.

7. Verfahren nach einem der Ansprüche 3 bis 6, wobei das Remigrieren der migrierten Daten in entsprechende Partitionen in der durch die zweite Partitionstabelle beschriebenen Partitionsbereitstellung umfasst:
Remigrieren, durch die elektronische Vorrichtung (130), von aus der dritten Partition migrierten Daten in einen dritten Zieladressbereich im Speicher (321), wobei
der dritte Zieladressbereich ein Bereich zwischen einer Startadresse und einer Endadresse der vierten Partition in der zweiten Partitionstabelle ist.

8. Verfahren nach Anspruch 7, wobei das Patch-Paket dritte Angabeinformationen umfasst und die dritten Angabeinformationen angeben, dass die dritte Partition in der ersten Partitionstabelle auf die vierte Partition in der zweiten Partitionstabelle aktualisiert wurde; und
vor dem Remigrieren, durch die elektronische Vorrichtung (130), von aus der dritten Partition migrierten Daten in einen dritten Zieladressbereich im Speicher (321) das Verfahren umfasst:
Lesen, durch die elektronische Vorrichtung (130), der dritten Angabeinformationen und Abfragen der zweiten Partitionstabelle nach der Startadresse und der Endadresse der vierten Partition basierend auf den dritten Angabeinformationen.

9. Verfahren nach einem der Ansprüche 1 bis 8, wobei das Neustarten, durch die elektronische Vorrichtung (130), zum ersten Mal nach dem Erhalten des Patch-Pakets umfasst:
Neustarten, durch die elektronische Vorrichtung (130), zum ersten Mal nach dem Erhalten des Patch-Pakets, falls das Patch-Paket ein Datenpaket mit einem voreingestellten Namen umfasst oder das Patch-Paket ein erstes Tag umfasst, wobei
das Datenpaket mit dem voreingestellten Namen verwendet wird, um die Partitionsbereitstellung anzupassen, und das erste Tag angibt, die Partitionsbereitstellung anzupassen.

10. Verfahren nach einem der Ansprüche 1 bis 9, wobei das Migrieren von Daten in der Basispartition, der ersten statischen Partition, der zweiten statischen Partition und der dynamischen Partition umfasst:
Migrieren der Daten in der Basispartition, der ersten statischen Partition, der zweiten statischen Partition und der dynamischen Partition, falls das Patch-Paket das Datenpaket mit dem voreingestellten Namen umfasst, wobei
das Datenpaket mit dem voreingestellten Namen verwendet wird, um die Partitionsbereitstellung anzupassen;
wenn das Patch-Paket das Datenpaket mit dem voreingestellten Namen umfasst, Speichern, durch die elektronische Vorrichtung (130), des Datenpakets mit dem voreingestellten Namen in einem voreingestellten Verzeichnis der elektronischen Vorrichtung (130) und Schreiben eines voreingestellten Befehls in die elektronische Vorrichtung (130), wobei der voreingestellte Befehl den voreingestellten Namen umfasst; und
nach dem Neustarten, durch die elektronische Vorrichtung (130), zum ersten Mal nach dem Erhalten des Patch-Pakets das Verfahren ferner umfasst:
Lesen, durch die elektronische Vorrichtung (130), des voreingestellten Befehls; und
das Migrieren der Daten in der Basispartition, der ersten statischen Partition, der zweiten statischen Partition und der dynamischen Partition, falls das Patch-Paket das Datenpaket mit dem voreingestellten Namen umfasst, umfasst:
Migrieren, durch die elektronische Vorrichtung (130), der Daten in der Basispartition, der ersten statischen Partition, der zweiten statischen Partition und der dynamischen Partition, falls der voreingestellte Befehl den voreingestellten Namen umfasst.

11. Verfahren nach Anspruch 10, wobei der voreingestellte Befehl ein voreingestelltes Verzeichnis umfasst und die zweite Partitionstabelle in dem Datenpaket mit dem voreingestellten Namen gespeichert ist; und das Migrieren der Daten in der Basispartition, der ersten statischen Partition, der zweiten statischen Partition und der dynamischen Partition, falls das Patch-Paket das Datenpaket mit dem voreingestellten Namen umfasst, umfasst:
Setzen, durch die elektronische Vorrichtung (130), einer voreingestellten globalen Variable, die angibt, die Partitionsbereitstellung anzupassen, falls das Patch-Paket das Datenpaket mit dem voreingestellten Namen umfasst;
Erfassen, durch die elektronische Vorrichtung (130), der voreingestellten globalen Variable und Migrieren der Daten in der Basispartition, der ersten statischen Partition, der zweiten statischen Partition und der dynamischen Partition; und
vor dem Aktualisieren der Partitionsbereitstellung des Speichers (321) von der durch die erste Partitionstabelle beschriebenen Partitionsbereitstellung auf die durch die zweite Partitionstabelle beschriebene Partitionsbereitstellung das Verfahren ferner umfasst:
Erhalten, durch die elektronische Vorrichtung (130) basierend auf dem voreingestellten Befehl aus dem voreingestellten Verzeichnis, des Datenpakets mit dem voreingestellten Namen und Erhalten der zweiten Partitionstabelle aus dem Datenpaket mit dem voreingestellten Namen.

12. Verfahren nach einem der Ansprüche 1 bis 11, wobei der Speicher (321) ferner eine Benutzerdatenpartition umfasst und das Migrieren von Daten in der Basispartition, der ersten statischen Partition, der zweiten statischen Partition und der dynamischen Partition umfasst:
Migrieren, durch die elektronische Vorrichtung (130), der Daten in der Basispartition, der ersten statischen Partition, der zweiten statischen Partition und der dynamischen Partition in die Benutzerdatenpartition; und
das Remigrieren der migrierten Daten in entsprechende Partitionen in der durch die zweite Partitionstabelle beschriebenen Partitionsbereitstellung umfasst:
Remigrieren der Daten in der Basispartition, der ersten statischen Partition, der zweiten statischen Partition und der dynamischen Partition in der Benutzerdatenpartition in die entsprechenden Partitionen in der durch die zweite Partitionstabelle beschriebenen Partitionsbereitstellung.

13. Verfahren nach einem der Ansprüche 2 bis 12, wobei das Patch-Paket eine erste Versionsnummer umfasst; und
das Erhalten, durch die elektronische Vorrichtung (130), eines Patch-Pakets umfasst:
Erhalten, durch die elektronische Vorrichtung (130), des Patch-Pakets, wenn die elektronische Vorrichtung (130) die Basispartition, die erste statische Partition und die dynamische Partition lädt und die elektronische Vorrichtung (130) betreibt;
nach dem Erhalten, durch die elektronische Vorrichtung (130), eines Patch-Pakets das Verfahren ferner umfasst:
Aktualisieren, durch die elektronische Vorrichtung (130), einer Versionsnummer in der zweiten statischen Partition auf die erste Versionsnummer; und
Einstellen, durch die elektronische Vorrichtung (130), einer Startreihenfolge der elektronischen Vorrichtung (130) auf das Starten von der zweiten statischen Partition;
nach dem Neustarten, durch die elektronische Vorrichtung (130), zum zweiten Mal das Verfahren ferner umfasst:
Laden, durch die elektronische Vorrichtung (130), der Basispartition, der zweiten statischen Partition und der dynamischen Partition , um die elektronische Vorrichtung (130) zu betreiben;
Lesen, durch die elektronische Vorrichtung (130), der ersten Versionsnummer aus der zweiten statischen Partition; und
das Erhalten, durch die elektronische Vorrichtung (130), eines Aktualisierungspakets eines Betriebssystems der elektronischen Vorrichtung (130) umfasst:
Erhalten, durch die elektronische Vorrichtung (130), des Aktualisierungspakets des Betriebssystems der elektronischen Vorrichtung (130) basierend auf der ersten Versionsnummer.

14. Elektronische Vorrichtung (130), wobei die elektronische Vorrichtung (130) einen Prozessor (310, 1701) und einen Speicher (321) umfasst, der Speicher (321) eine Basispartition, eine erste statische Partition, eine zweite statische Partition, eine dynamische Partition und eine Benutzerdatenpartition umfasst, die elektronische Vorrichtung (130) ferner eine erste Partitionstabelle umfasst, die erste Partitionstabelle verwendet wird, um eine Art der Partitionsbereitstellung der Basispartition, der ersten statischen Partition, der zweiten statischen Partition und der dynamischen Partition zu beschreiben, und der Prozessor (310, 1701) dazu konfiguriert ist, in dem Speicher (321) gespeicherten Softwarecode auszuführen, um die elektronische Vorrichtung (130) dazu zu befähigen, das Verfahren nach einem der Ansprüche 1 bis 13 durchzuführen.

15. Computerlesbares Speichermedium, das ein Computerprogramm speichert, wobei, wenn das Computerprogramm auf einer elektronischen Vorrichtung (130) ausgeführt wird, das Computerprogramm die elektronische Vorrichtung (130) dazu befähigt, das Verfahren nach einem der Ansprüche 1 bis 13 durchzuführen.

## Revendications

1. Procédé de mise à niveau d'un système d'exploitation, appliqué à un dispositif électronique (130), dans lequel le dispositif électronique (130) comprend une mémoire (321), la mémoire (321) comprend une partition de base, une première partition statique, une seconde partition statique et une partition dynamique, le dispositif électronique (130) comprend une première table de partition, la première table de partition est utilisée pour décrire un type de déploiement de partition de la partition de base, de la première partition statique, de la seconde partition statique et de la partition dynamique, et le procédé comprend :
l'obtention (S603), par le dispositif électronique (130), d'un paquet de correctif, dans lequel le paquet de correctif comprend une seconde table de partition, et la seconde table de partition est utilisée pour décrire un autre type de déploiement de partition de la partition de base, de la première partition statique, de la seconde partition statique et de la partition dynamique ;
le redémarrage (S606), par le dispositif électronique (130), pour la première fois après l'obtention du paquet de correctif, et l'entrée dans un mode de récupération ;
la migration (S607), par le dispositif électronique (130) dans le mode de récupération, de données dans la partition de base, la première partition statique, la seconde partition statique et la partition dynamique, la mise à jour (S608) du déploiement de partition de la mémoire (321) du déploiement de partition décrit par la première table de partition au déploiement de partition décrit par la seconde table de partition, et la remigration (S609) des données migrées vers des partitions correspondantes dans le déploiement de partition décrit par la seconde table de partition ;
le redémarrage (S610), par le dispositif électronique (130), pour la seconde fois ; et
l'obtention (S613), par le dispositif électronique (130), d'un paquet de mise à niveau d'un système d'exploitation du dispositif électronique (130), et l'écriture de données de mise à niveau dans le paquet de mise à niveau dans les partitions correspondantes dans le déploiement de partition décrit dans la seconde table de partition, pour achever la mise à niveau du système d'exploitation.

2. Procédé selon la revendication 1, dans lequel la première table de partition comprend des informations de partition d'une pluralité de sous-partitions dans la partition de base, la première partition statique et la seconde partition statique dans un système d'exploitation d'une première version, et des informations de partition de la partition dynamique ; et la seconde table de partition comprend des informations de partition d'une pluralité de sous-partitions dans la partition de base, la première partition statique et la seconde partition statique dans un système d'exploitation d'une seconde version, et les informations de partition de la partition dynamique, dans lequel
les informations de partition comprennent une taille de partition, un nom de partition, une adresse de début et une adresse de fin.

3. Procédé selon la revendication 2, dans lequel le redémarrage, par le dispositif électronique (130), pour la première fois et l'entrée dans un mode de récupération comprend :
le redémarrage, par le dispositif électronique (130), pour la première fois et l'entrée dans le mode de récupération si la première table de partition est différente de la seconde table de partition, dans lequel le fait que la première table de partition est différente de la seconde table de partition comprend au moins l'un de ce qui suit :
la seconde table de partition comprend des informations de partition d'une première partition, et la première table de partition ne comprend pas les informations de partition de la première partition ;
la première table de partition comprend des informations de partition d'une deuxième partition, et la seconde table de partition ne comprend pas les informations de partition de la deuxième partition ;
la première table de partition comprend des informations de partition d'une troisième partition, la seconde table de partition comprend des informations de partition d'une quatrième partition, un nom de partition de la troisième partition est différent d'un nom de partition de la quatrième partition, mais la troisième partition et la quatrième partition sont utilisées pour stocker les mêmes données ; et
à la fois la première table de partition et la seconde table de partition comprennent des informations de partition d'une cinquième partition, mais des premières informations de partition de la cinquième partition dans la première table de partition sont différentes de premières informations de partition de la cinquième partition dans la seconde table de partition, et les premières informations de partition ne comprennent pas le nom de partition, dans lequel
la première partition, la deuxième partition, la troisième partition, la quatrième partition et la cinquième partition sont des sous-partitions dans la partition de base, la première partition statique et la seconde partition statique, ou la première partition, la deuxième partition, la troisième partition, la quatrième partition et la cinquième partition sont les partitions dynamiques.

4. Procédé selon la revendication 3, dans lequel la remigration des données migrées vers des partitions correspondantes dans le déploiement de partition décrit par la seconde table de partition comprend :
la remigration, par le dispositif électronique (130), de données migrées depuis une sixième partition vers une première plage d'adresses cibles dans la mémoire (321), dans lequel
la sixième partition est une partition dans la seconde table de partition autre que la première partition, la deuxième partition et la quatrième partition, la sixième partition est une souspartition dans la partition de base, la première partition statique et la seconde partition statique, ou la sixième partition est la partition dynamique, et la première plage d'adresses cibles est une plage entre une adresse de début et une adresse de fin de la sixième partition dans la seconde table de partition.

5. Procédé selon la revendication 3 ou 4, dans lequel le paquet de correctif comprend des premières informations d'indication, et les premières informations d'indication indiquent que la première partition est nouvellement ajoutée à la seconde table de partition par comparaison avec la première table de partition ; et la remigration des données migrées vers des partitions correspondantes dans le déploiement de partition décrit par la seconde table de partition comprend :
la lecture, par le dispositif électronique (130), des premières informations d'indication, et l'interrogation de la seconde table de partition pour obtenir l'adresse de début et l'adresse de fin de la première partition sur la base des premières informations d'indication ; et
l'effacement, par le dispositif électronique (130), de données dans une deuxième plage d'adresses cibles dans la mémoire (321), dans lequel
la deuxième plage d'adresses cibles est une plage entre une adresse de début et une adresse de fin de la première partition dans la seconde table de partition.

6. Procédé selon l'une quelconque des revendications 3 à 5, dans lequel la remigration des données migrées vers des partitions correspondantes dans le déploiement de partition décrit par la seconde table de partition comprend :
l'omission de la récupération, par le dispositif électronique (130), de données migrées à partir de la deuxième partition ; et
le paquet de correctif comprend des deuxièmes informations d'indication, et les deuxièmes informations d'indication indiquent que la deuxième partition est supprimée dans la seconde table de partition par comparaison avec la première table de partition ; et
le procédé comprend en outre :
la lecture, par le dispositif électronique (130), des deuxièmes informations d'indication, et la détermination, sur la base des deuxièmes informations d'indication, des données migrées depuis la deuxième partition.

7. Procédé selon l'une quelconque des revendications 3 à 6, dans lequel la remigration des données migrées vers des partitions correspondantes dans le déploiement de partition décrit par la seconde table de partition comprend :
la remigration, par le dispositif électronique (130), de données migrées depuis la troisième partition vers une troisième plage d'adresses cibles dans la mémoire (321), dans lequel
la troisième plage d'adresses cibles est une plage entre une adresse de début et une adresse de fin de la quatrième partition dans la seconde table de partition.

8. Procédé selon la revendication 7, dans lequel le paquet de correctif comprend des troisièmes informations d'indication, et les troisièmes informations d'indication indiquent que la troisième partition dans la première table de partition est mise à jour vers la quatrième partition dans la seconde table de partition ; et
avant la remigration, par le dispositif électronique (130), de données migrées depuis la troisième partition vers une troisième plage d'adresses cibles dans la mémoire (321), le procédé comprend :
la lecture, par le dispositif électronique (130), des troisièmes informations d'indication, et l'interrogation de la seconde table de partition pour obtenir l'adresse de début et l'adresse de fin de la quatrième partition sur la base des troisièmes informations d'indication.

9. Procédé selon l'une quelconque des revendications 1 à 8, dans lequel le redémarrage, par le dispositif électronique (130), pour la première fois après l'obtention du paquet de correctif comprend :
le redémarrage, par le dispositif électronique (130), pour la première fois après l'obtention du paquet de correctif, si le paquet de correctif comprend un paquet de données avec un nom prédéfini, ou si le paquet de correctif comprend une première étiquette, dans lequel
le paquet de données avec le nom prédéfini est utilisé pour ajuster le déploiement de partition, et la première étiquette indique d'ajuster le déploiement de partition.

10. Procédé selon l'une quelconque des revendications 1 à 9, dans lequel la migration de données dans la partition de base, la première partition statique, la seconde partition statique et la partition dynamique comprend :
la migration des données dans la partition de base, la première partition statique, la seconde partition statique et la partition dynamique si le paquet de correctif comprend le paquet de données avec le nom prédéfini, dans lequel
le paquet de données avec le nom prédéfini est utilisé pour ajuster le déploiement de partition ;
lorsque le paquet de correctif comprend le paquet de données avec le nom prédéfini, le stockage, par le dispositif électronique (130), du paquet de données avec le nom prédéfini dans un répertoire prédéfini du dispositif électronique (130), et l'écriture d'une instruction prédéfinie dans le dispositif électronique (130), dans lequel l'instruction prédéfinie comprend le nom prédéfini ; et
après le redémarrage, par le dispositif électronique (130), pour la première fois après l'obtention du paquet de correctif, le procédé comprend en outre :
la lecture, par le dispositif électronique (130), de l'instruction prédéfinie ; et
la migration des données dans la partition de base, la première partition statique, la seconde partition statique et la partition dynamique si le paquet de correctif comprend le paquet de données avec le nom prédéfini comprend :
la migration, par le dispositif électronique (130), des données dans la partition de base, la première partition statique, la seconde partition statique et la partition dynamique si l'instruction prédéfinie comprend le nom prédéfini.

11. Procédé selon la revendication 10, dans lequel l'instruction prédéfinie comprend un répertoire prédéfini, et la seconde table de partition est stockée dans le paquet de données avec le nom prédéfini ; et la migration des données dans la partition de base, la première partition statique, la seconde partition statique et la partition dynamique si le paquet de correctif comprend le paquet de données avec le nom prédéfini comprend :
la définition, par le dispositif électronique (130), d'une variable globale prédéfinie indiquant d'ajuster le déploiement de partition si le paquet de correctif comprend le paquet de données avec le nom prédéfini ;
la détection, par le dispositif électronique (130), de la variable globale prédéfinie, et la migration des données dans la partition de base, la première partition statique, la seconde partition statique et la partition dynamique ; et
avant la mise à jour du déploiement de partition de la mémoire (321) du déploiement de partition décrit par la première table de partition au déploiement de partition décrit par la seconde table de partition, le procédé comprend en outre :
l'obtention, par le dispositif électronique (130) sur la base de l'instruction prédéfinie depuis le répertoire prédéfini, du paquet de données avec le nom prédéfini, et l'obtention de la seconde table de partition à partir du paquet de données avec le nom prédéfini.

12. Procédé selon l'une quelconque des revendications 1 à 11, dans lequel la mémoire (321) comprend en outre une partition de données d'utilisateur, et la migration de données dans la partition de base, la première partition statique, la seconde partition statique et la partition dynamique comprend :
la migration, par le dispositif électronique (130), des données dans la partition de base, la première partition statique, la seconde partition statique et la partition dynamique vers la partition de données d'utilisateur ; et
la remigration des données migrées vers des partitions correspondantes dans le déploiement de partition décrit par la seconde table de partition comprend :
la remigration des données dans la partition de base, la première partition statique, la seconde partition statique et la partition dynamique dans la partition de données d'utilisateur vers les partitions correspondantes dans le déploiement de partition décrit par la seconde table de partition.

13. Procédé selon l'une quelconque des revendications 2 à 12, dans lequel le paquet de correctif comprend un premier numéro de version ; et
l'obtention, par le dispositif électronique (130), d'un paquet de correctif comprend :
l'obtention, par le dispositif électronique (130), du paquet de correctif lorsque le dispositif électronique (130) charge la partition de base, la première partition statique et la partition dynamique et fait fonctionner le dispositif électronique (130) ;
après l'obtention, par le dispositif électronique (130), d'un paquet de correctif, le procédé comprend en outre :
la mise à jour, par le dispositif électronique (130), d'un numéro de version dans la seconde partition statique avec le premier numéro de version ; et
la définition, par le dispositif électronique (130), d'un ordre de démarrage du dispositif électronique (130) pour démarrer à partir de la seconde partition statique ;
après le redémarrage, par le dispositif électronique (130), pour la seconde fois, le procédé comprend en outre :
le chargement, par le dispositif électronique (130), de la partition de base, de la seconde partition statique et de la partition dynamique pour faire fonctionner le dispositif électronique (130) ;
la lecture, par le dispositif électronique (130), du premier numéro de version à partir de la seconde partition statique ; et
l'obtention, par le dispositif électronique (130), d'un paquet de mise à niveau d'un système d'exploitation du dispositif électronique (130) comprend :
l'obtention, par le dispositif électronique (130), du paquet de mise à niveau du système d'exploitation du dispositif électronique (130) sur la base du premier numéro de version.

14. Dispositif électronique (130), dans lequel le dispositif électronique (130) comprend un processeur (310, 1701) et une mémoire (321), la mémoire (321) comprend une partition de base, une première partition statique, une seconde partition statique, une partition dynamique et une partition de données d'utilisateur, le dispositif électronique (130) comprend en outre une première table de partition, la première table de partition est utilisée pour décrire un type de déploiement de partition de la partition de base, de la première partition statique, de la seconde partition statique et de la partition dynamique, et le processeur (310, 1701) est configuré pour exécuter un code logiciel stocké dans la mémoire (321), pour rendre le dispositif électronique (130) capable d'exécuter le procédé selon l'une quelconque des revendications 1 à 13.

15. Support de stockage lisible par ordinateur, stockant un programme informatique, dans lequel, lorsque le programme informatique est exécuté sur un dispositif électronique (130), le programme informatique rend le dispositif électronique (130) capable d'exécuter le procédé selon l'une quelconque des revendications 1 à 13.
